(19) Europäisches Patentamt
European Patent Office
Office européen des brevets

(11) **EP 4 779 939 A1**

## (12) EUROPEAN PATENT APPLICATION

(43) Date of publication:
**22.07.2026 Bulletin 2026/30**

(21) Application number: **25305050.4**

(22) Date of filing: **15.01.2025**

(51) International Patent Classification (IPC):
**H04L 27/26** $^{(2006.01)}$

(52) Cooperative Patent Classification (CPC):
**H04L 27/2639; H04L 27/2631; H04L 27/26416;
H04L 27/26532; H04L 27/2654; H04L 27/2698**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Institut Mines Telecom
91120 Palaiseau (FR)**

(72) Inventors:
• **HAMDAR, Fatima
29280 Plouzane (FR)**

• **NADAL, Jérémy
29200 Brest (FR)**
• **ABDEL NOUR, Charbel
29200 Brest (FR)**
• **BAGHDADI, Amer
29200 Brest (FR)**

(74) Representative: **Atout PI Laplace
Immeuble Up On
25 Boulevard Romain Rolland
CS 40072
75685 Paris Cedex 14 (FR)**

## (54) WIRELESS COMMUNICATION USING OTFS AND OQAM FBMC

(57)    A system and method of encoding a binary data-stream for wireless transmission combining characteristics of OFDM and FBMC type systems is proposed, based on a precoding schemes adapted to maintaining real orthogonality so that the output of the OTFS processing consists of real-valued symbols. The precoder is intricately linked to the definition of a subsequent 2d linear phase rotation. Two possible precoder architectures are proposed, in which interleaver and conjugate operations process partwise or en bloc the incoming data matrix, before the original matrix is concatenated with the interleaved and conjugated matrix (or its components) to obtain a new matrix for subcarrier allocation and filter bank encoding prior to transmission. Corresponding receiving mechanisms are proposed.

*FIG. 3*

EP 4 779 939 A1

**Description**

FIELD OF THE INVENTION

The invention pertains to encoding a binary datastream for wireless transmission, and to decoding a corresponding received datastream.

BACKGROUND PRIOR ART

Mobile radio channels exhibit a dual-dispersive nature, where the presence of multipath propagation leads to time dispersion, and Doppler shifts introduce frequency dispersion. To mitigate the impact of time dispersion-induced inter-symbol interference (ISI), multicarrier modulation schemes like Orthogonal frequency division multiplexing (OFDM) are commonly employed. Indeed, OFDM has been widely used in both the fourth-generation (4G) and the fifth-generation (5G) cellular systems. However, Doppler shifts in OFDM introduce inter-carrier interference (ICI), which can degrade system performance. One approach to address both ISI and ICI in OFDM is through pulse shaping. In pulse-shaped OFDM systems, optimized pulse shapes in the time-frequency domain are utilized, based on general time-frequency lattices. Indeed, the ability of the system to withstand time-frequency dispersions relies on the time-frequency localization of the pulse, influenced by Heisenberg's uncertainty principle.

Filter bank multicarrier (FBMC) with Offset QAM (OQAM) is one of the waveforms that has been investigated in recent years as an alternative to OFDM in the context of 5G. In recent years, several innovative contributions have been proposed for FBMC/OQAM. At the transmitter side, a novel short prototype filter (PF) denoted by Near Perfect Reconstruction 1 (NPR1) having the same duration as one OFDM symbol was proposed to significantly reduce latency, hardware complexity and energy consumption, as described in the article by Nadal, J., Abdel Nour, C., and Baghdadi, A., entitled "Design and Evaluation of a Novel Short Prototype Filter for FBMC/OQAM Modulation," IEEE Access, vol. 6, pp. 19 610-19 625, 2018.

1) FBMC/OQAM transmitter: The polyphase Network (PPN)-based technique is the primary approach for the FBMC modulation.

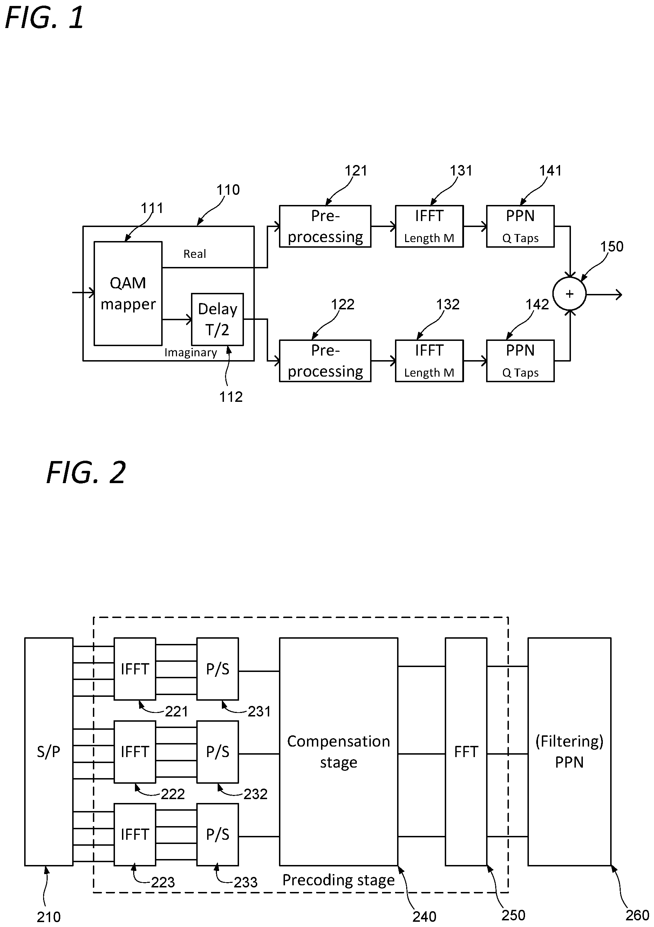

Figure 1 shows a PPN FBMC/OQAM transmitter implementation.

As shown, the implementation of figure 1 comprises an OQAM mapper 110 comprising a QAM mapper 111 creating real and imaginary values from a binary input. The imaginary values are delayed by T/2 with respect to the real values by delay unit 112. The real and imaginary values are output to respective processing channels. Each processing channel comprises in sequence a preprocessing unit 121, 122, an Inverse Fast Fourier Transform (IFFT) unit 131, 132 and a Polyphase Network (PPN) 141, 142. The outputs of the two processing channels are then combined by a summer 150.

In operation, a Pulse-amplitude modulation (PAM) symbol at subcarrier index $l$ and time slot $k$, $a_k(l)$ is obtained from the separation of the respective real and imaginary symbols output by the QAM mapper 111 equivalent to OFDM, where L is the total number of available sub-carriers and K the number of FBMC symbols with separation of real and imaginary parts respectively at time slots $2k$ and $2k + 1$.

Pre-processing unit 121, 122 computes the phase term $\phi_k(l)$ which to keep the orthogonality in the real field must be a quadrature phase rotation term, i.e. $\phi_k(l) = j^{k+l}$, or $\phi_k(l) = j^{k+l+kl}$.

The outputs of two Inverse Fast Fourier Transform (IFFT) blocks 131, 132 separately process the real and imaginary sub-carriers in accordance with the equation:

$$u_k(\ell) = \sum_{l=0}^{L-1} a_k(l)\phi_k(l)\, e^{i\frac{2\pi}{L}\ell l} \qquad \text{Eq. 1}$$

The Polyphase Network (PPN) 141, 142 corresponds in effect to a bank of phase shifters providing a respective phase shift for each sub-carrier.

As shown, a sequence of operations is performed, starting with a size- L IFFT, followed by PPN filtering. The PPN processing is dependent on the length of the PF, which correlates with the overlapping factor Q. Using a short PF (Q = 1) notably reduces computational complexity and latency. To maintain orthogonality in the real field, the OQAM scheme is used. Consequently, the PPN output signal is delayed by L/2 samples before being overlapped with the signal from the previous. Therefore, if L is the total number of subcarriers and $a_k(l)$ are the user's pulse-amplitude modulated (PAM) symbols at time slot $k$, subcarrier index $l$, then the baseband signal $s(\ell)$ Where $\ell$ represents the sample time index is expressed as

$$s(\ell) = \sum_{k=0}^{K} g\left(\ell - k\frac{L}{2}\right) x_k(\ell) \qquad \text{Eq. 2}$$

$$x_k(\ell) = \sum_{l=0}^{L-1} (-1)^{lk} a_k(l) \Phi_k(l) e^{i2\pi\frac{\ell l}{L}} \qquad \text{Eq. 3}$$

The PPN 141, 142 can be seen as a digital filter, whose design represents important trade-offs between performance and system complexity and the final overlap and sum due to OQAM processing.

When using a short filter with an Overlapping Factor of 1 for the PPN, this latter can be seen as a windowing operation: the outputs of the IFFT are simply multiplied by the prototype filter impulse response. Consequently, the hardware complexity overhead introduced by the PPN is limited.

On the other hand, Orthogonal time frequency space (OTFS) modulation, a scheme introduced in recent studies as described in the article by Li, M., Liu, W., and Lei, J., entitled "A review on orthogonal time-frequency space modulation: State-of-art, hotspots and challenges," Computer Networks, vol. 224, p. 109597, 2023. [Online]. Available: https://www. sciencedirect.com/science/article/pii/S1389128623000427], which offers compelling characteristics capable of dealing with high-Doppler channels. Instead of conventional time-frequency (TF) domain modulation, OTFS operates in the delay-Doppler (DD) domain. This innovative strategy effectively transforms a time-varying channel into a two dimensional quasi-time-invariant channel, enhancing its resilience to high Doppler spread.

## OTFS modulation

The OTFS modulation process begins with a two-dimensional ISFFT transform applied to the N×M matrix A. The latter comprises the Amplitude Phase Modulation (APM) data symbols. Upon this transformation, the APM symbols are converted from the 2D DD domain into the 2D Time- Frequency (TF) domain as follows:

$$U_{lk} = W_{tx}(l, k) \times \frac{1}{\sqrt{NM}} \sum_{n=0}^{N-1} \sum_{m=0}^{M-1} a_{mn} e^{-i2\pi\left(\frac{mk}{M} - \frac{nl}{N}\right)} \qquad \text{Eq. 4}$$

where $W_{tx}(l, k)$ is a 2D transmit windowing function, $a_{mn}$ is an element of A at a Doppler index $m$ and delay index $n$, $M$ and $N$ are the total number of Doppler/time and delay/frequency bins, respectively. Next, Heisenberg transform is applied for the TF symbols $U_{lk}$ as shown below

$$s(\ell) = \sum_{k=0}^{K-1} \sum_{l=0}^{L-1} U_{lk} g_{tx}(\ell - KL) e^{i\frac{2\pi l\ell}{L}} \qquad \text{Eq. 5}$$

where $g_{tx}$ is the impulse response of the transmit PF and $\ell$ represents the sample time index. It is important to note that most state-of-the-art solutions typically consider $g_{tx}$ and $W_{tx}$ as rectangular windows, neglecting their potential benefits in mitigating out-of-band power leakage (OOBPL) and improved robustness to several impairments. However, deviating from rectangular functions undermines the intricate orthogonality of the OTFS waveform, necessitating sophisticated receiver techniques to tackle the ensuing interference. OTFS offers several advantages, including managing high Doppler effects. However, in the presence of a time-varying channel, OTFS experiences ISI and ICI. Moreover, the conventional data detection methods proposed for OTFS, including iterative minimum mean squared error (MMSE), maximum-likelihood, and message-passing are known for their effectiveness in mitigating the impact of high Doppler effects, however, they suffer from high computational complexity.

The OTFS technique uses the inherent complex orthogonality of the OFDM system to convert a time-varying channel to a 2D quasi-time-invariant channel in DD domain. Consequently, to transition from the OFDM-based system to a filter bank (FB) based one, it is imperative to ensure the complex orthogonality of the latter. For instance, a method involving time spreading was proposed for recovering complex orthogonality in the article by Zakaria, R. and Le Ruyet, D, entitled "A novel filter-bank multicarrier scheme to mitigate the intrinsic interference: Application to MIMO systems," IEEE Transactions on Wireless Communications, vol. 11, no. 3, pp. 1112-1123, 2012.] and the article by Demmer, D., Gerzaguet, R., Doré, J.-B., Le Ruyet, D., and Kténas, D.entitled "Block-filtered ofdm: A novel waveform for future wireless technologies," in 2017 IEEE International Conference on Communications (ICC), 2017, pp. 1-6.].

Figure 2 shows the OTFS technique using a filter bank multi-carrier scheme.

The authors of the article by Pereira, R., Da Rocha, C. A. F., Chang, B. S., and Le Ruyet, D. entitled "A two-dimensional FFT precoded filter bank scheme," IEEE Transactions on Wireless Communications, pp. 1-1, 2023.9 proposed a new precoded FB system based on 2D-FFT in which the OFDM transmitter is changed to a FBMC one, thus obtaining a lower out-of-band emission, as presented schematically in figure 2.

As shown, an incoming signal is converted from a serial to a parallel structure by Serial to Parallel converter 210, sets of symbols are transmitted in parallel to respective IFFT Blocks 221, 222, 223, such that an overall IFFT is performed in the Doppler domain. The resulting values are then converted back to respective serial representations by Parallel to Serial converters 231, 232, 233. Interference cancellation is then performed by Compensation stage 240 based on the addition of a compensatory multiplicative factor. Furthermore, after mapping the symbols on the time-frequency grid, these will now be transmitted by a filter bank, before performing a Fourier transform in the delay domain at FFT 250. A modified PPN filtering operation is then performed to obtain the final encoded signal. On this basis, complex orthogonality of the FBMC transmission is guaranteed by using a precoding based on a discrete Fourier transform, which is also used to implement the two-dimensional fast Fourier transform.

While offering the anticipated benefits, this approach has the drawback of requiring a large number of Fourier transforms, with a correspondingly high computational complexity and resulting system cost, power consumption, etc.

In addition, such an approach implies a high computational complexity at the receiver side to combat ISI and ICI. Therefore, it is particularly appealing to design a new waveform that harness the benefits of both FBMC and OTFS waveforms, aiming to leverage their respective advantages while reducing the complexity of the system.

SUMMARY OF THE INVENTION

In accordance with the present invention in a first instance there is provided a method of encoding a binary data stream for wireless transmission, said method comprising the steps of: dividing a complex symbol data stream into two parallel complex symbol substreams, introducing a delay equal to half the duration of a symbol of said complex symbol data stream to one said complex symbol substream, performing precoding on each complex symbol substream; and performing an delay-Doppler modulated binary data stream encoding of each said complex symbol substream. The operation of performing an delay-Doppler modulated binary data stream encoding comprising the steps of performing a 2D linear transform to transform the input samples represented in Time-Frequency domain to output samples represented in Delay-Doppler, performing a 2D linear phase rotation, and performing a filter bank encoding. The precoding and 2D linear phase rotation are defined such that the input to said filter bank consists of real-valued symbols. The method then combines the two parallel complex substreams to obtain a data stream for transmission.

In a development of the first aspect, the step of precoding comprises for each said complex symbol substream, splitting said substream into a plurality of successive batches, each said batch defining an input matrix X of size $N \times M$, and interleaving said input matrix to obtain an interleaved matrix defined as $X_p[n, m] = X[N - n - 1, M - m - 1]$, where $0 \le m \le M - 1$, $0 \le n \le N - 1$, $N$ and $M$ represent the number of rows and columns, respectively, of the input matrix performing a conjugate operation on said interleaved matrix to obtain a conjugate interleaved matrix and, concatenating said input matrix with said conjugate interleaved matrix to obtain a precoded matrix of size $2N \times M$.

In a development of the first aspect, the step of performing delay-Doppler modulated binary data stream encoding comprises performing a two-dimensional windowing that includes a two-dimensional linear phase wherein said two-dimensional linear phase rotation comprises

$$W_N^\alpha \, W_M^\beta = \left[ exp\left(\frac{2i\pi\alpha n}{N}\right) exp\left(\frac{2i\pi\beta m}{M}\right) \right]_{n\in[0,2N-1],\, m\in[0,M-1]}$$

wherein

$$\alpha = \frac{N+1}{4}; \; \beta = \frac{M-1}{2}$$

for the said complex symbol substream incorporating no delay, and $iW_N^\alpha W_M^\beta$ for the said complex symbol substream incorporating said delay.

In accordance with the present invention in a second aspect, there is provided a computer program comprising instructions which, when the program is executed by a computer, cause the computer to carry out the method of the first aspect.

In accordance with the present invention in a second aspect, there is provided a computer-readable medium comprising instructions which, when executed by a computer, cause the computer to carry out the method of the first aspect.

In accordance with the present invention in a fourth aspect, there is provided a data encoder for the preparation of a binary data stream for wireless transmission, said encoder comprising: a splitter configured to dividing a complex symbol data stream into two parallel complex symbol substreams, a delay block configured to introduce a delay equal to half the duration of a symbol of said complex symbol data stream to one said complex symbol substream, a precoder for each complex symbol substream configured to perform a precoding operation, and an OTFS encoder configured to perform an OTFS encoding of each said complex symbol substream. The operation of performing an OTFS encoding comprises performing a 2D linear transform, performing a 2D linear phase rotation, and performing a filter bank encoding. The precoding and said 2D linear phase rotation are defined such that the input to said filter bank consists of real-valued symbols, and further comprising a concatenator configured to combine said two parallel complex substreams to obtain a data stream for transmission.

In accordance with the present invention in a fifth aspect, there is provided a method of processing delay-Doppler modulated binary data stream for decoding, said binary data stream modulated with a defined Prototype Filter and comprising blocks of $L$ subchannels, $M$ Doppler/time bins and $N$ Delay/frequency Bins said method comprising the steps of extracting a predetermined number $M$ of successive upsampled blocks of size $LN_{UF}$ where $N_{UF}$ is the upsampling factor from said datastream, performing a fast Fourier transform of size $LN_{UF}$ on the extracted block, extracting the upsampled active carriers from the output of said upsampled fast Fourier transform, performing a circular convolution on each extracted upsampled active carrier, such that $N_{UF}$ stages of circular convolution are performed by the frequency shifted responses of the prototype filter on each respective extracted upsampled active carrier value to obtain respective vector outputs $Y_m(n, \ell)$ defined as:

$$Y_m(n, \ell) = \sum_{p=-\Delta}^{\Delta} G_\ell(p) X_m(\ell + (n-p)N_{UF})$$

where $\Delta$ denotes the number of non-truncated filter coefficients, and $G$ is the frequency shifted response of the Prototype Filter PF deduced from its impulse response g as

$$G_\ell(p) = e^{i\frac{\pi\ell}{N_{UF}}} \sum_{k=0}^{M-1} g(k) e^{i\frac{2\pi\ell(k-\frac{M}{2})}{N}} e^{-i\frac{2\pi pk}{M}}$$

summing the vector outputs $Y_m(n, \ell)$ to obtain a $2N$ Filter bank outputs $Y_m(n)$ by

$$Y_m(n) = \sum_{\ell=0}^{N_{UF}-1} Y_m(n, \ell)$$

performing a 2D linear phase rotation, performing a 2D linear transform to transform the input samples represented in Time-Frequency domain to output samples represented in Delay-Doppler domain, and performing a postprocessing operation, wherein said postprocessing operation comprises a corresponding decoding operation for said delay-Doppler modulation on said $2N \times M$ matrix of Filter bank outputs to obtain an $N \times M$ output data matrix and where said postprocessing operation and said 2D linear phase rotation are defined such that the output to said postprocessing operation, consists of orthogonal complex-valued symbols.

In accordance with the present invention in a fifth aspect, the 2D linear transform comprises a row-wise IFFT of size $M$, followed by a column-wise FFT of size $2N$, or a column-wise FFT of size $2N$ followed by a row-wise IFFT of size $M$, on said $2N \times M$ matrix.

In accordance with the present invention in a fifth aspect, the 2D linear phase rotation comprises

$$W_N^\alpha \, W_M^\beta = \left[ exp\left(\frac{2i\pi\alpha k}{N}\right) exp\left(\frac{2i\pi\beta k'}{M}\right) \right]_{k\in[0,2N-1],k'\in[0,M-1]}$$

where $\alpha$ and $\beta$ must be chosen to have orthogonal complex-valued symbols at the output of the decoder, and where the sign of the $(\alpha,\beta)$ coefficients must be the opposite of the ones used in the 2D windowing step performed for transmitting data.

In accordance with a development of the fifth aspect, the step of postprocessing comprises partitioning an intermediate $2N \times M$ matrix output by said filter bank decoding operation, into a first submatrix comprising elements the last $N$ rows of said intermediate $2N \times M$ matrix and a second submatrix comprising the remaining first $N$ rows of said intermediate $2N \times M$ matrix, performing a de-interleaving operation on said first submatrix to obtain a de-interleaved matrix defined as $X_p[n, m] = X[N - n - 1, M - m - 1]$, where $0 \leq m \leq M - 1$, $0 \leq n \leq N - 1$, $N$ and $M$ represent the number of rows and columns, respectively, of the first submatrix,

performing a conjugate operation on said de-interleaved first sub-matrix to obtain a conjugate de- interleaved first sub-matrix and,

adding said conjugate de- interleaved first sub-matrix to said second subject.

In accordance with a development of the fifth aspect, the 2D linear phase rotation comprises

$$W_N^\alpha \, W_M^\beta = \left[ exp\left(\frac{2i\pi\alpha k}{N}\right) exp\left(\frac{2i\pi\beta k'}{M}\right) \right]_{k\in[0,2N-1],k'\in[0,M-1]}$$

wherein

$$\alpha = \pm\frac{N+1}{4}; \; \beta = \pm\frac{M-1}{2}$$

In accordance with the present invention in a sixth aspect there is provided a computer program comprising instructions which, when the program is executed by a computer, cause the computer to carry out the method of the fifth aspect.

In accordance with the present invention in a seventh aspect there is provided a computer-readable medium comprising instructions which, when executed by a computer, cause the computer to carry out the method of the fifth aspect.

In accordance with the present invention in an eighth aspect receiver for decoding a delay-Doppler modulated binary data stream, said binary data stream modulated with a defined Prototype Filter and comprising blocks of $L$ subchannels, $M$ Doppler/time bins and $N$ Delay/frequency Bins said receiver comprising: a symbol extractor configured to extract a predetermined number $M$ of successive upsampled blocks of size $LN_{UF}$ where $N_{UF}$ is the upsampling factor from said data stream, a fast Fourier transform module configured to perform a fast Fourier transform of size $LN_{UF}$ on the extracted block, a subcarrier extractor configured to extract the upsampled active carriers from the output of said upsampled fast Fourier transform,

a processing module configured to perform a circular convolution on each extracted upsampled active carrier, such that $N_{UF}$ stages of circular convolution are performed by the frequency shifted responses of the prototype filter on each respective extracted upsampled active carrier value to obtain respective vector outputs $Y_m(n, \ell)$ defined as:

$$Y_m(n, \ell) = \sum_{p=-\Delta}^{\Delta} G_\ell(p) X_m(\ell + (n - p)N_{UF})$$

where $\Delta$ denotes the number of non-truncated filter coefficients, and $G$ is the frequency shifted response of the Prototype Filter PF deduced from its impulse response g as

$$G_\ell(p) = e^{i\frac{\pi\ell}{N_{UF}}} \sum_{k=0}^{M-1} g(k)\, e^{i\frac{2\pi\ell(k-\frac{M}{2})}{N}} e^{-i\frac{2\pi pk}{M}}$$

a summer configured to sum the vector outputs $Y_m(n, \ell)$ to obtain a 2N Filter bank outputs $Y_m(n)$ by

$$Y_m(n) = \sum_{\ell=0}^{N_{UF}-1} Y_m(n, \ell)$$

a phase rotation module configured to perform a 2D linear phase rotation on the output of said summer, a linear transform, module configured to perform a 2D linear transform on the output of said phase rotation module, and a postprocessing module, configured to perform a corresponding decoding operation for said delay-Doppler modulation on said $2N \times M$ matrix of Filter bank outputs to obtain an $N \times M$ output data matrix and where said postprocessing operation and said 2D linear phase rotation are defined such that the output to said postprocessing operation, consists of orthogonal complex-valued symbols.

## BRIEF DESCRIPTION OF THE DRAWINGS

The invention will be better understood and its various features and advantages will emerge from the following description of a number of exemplary embodiments provided for illustration purposes only and its appended figures in which:

Figure 1       shows a PPN FBMC/OQAM transmitter implementation;
Figure 2       shows the OTFS technique using a filter bank multi carrier scheme;
Figure 3       presents a modulation system in accordance with an embodiment;
Figure 4       shows a first precoder implementation in accordance with an embodiment;
Figure 5       shows a second precoder implementation in accordance with an embodiment;
Figure 6       presents details of a partitioning operation in accordance with an embodiment;
Figure 7       presents the structure of the output of the concatenation;
Figure 8       presents in detail components of the OTFS block in accordance with an embodiment;
Figure 9a      presents a first exemplary mechanism for Subcarrier Allocation;
Figure 9b      presents a second exemplary mechanism for Subcarrier Allocation;
Figure 9c      presents a third exemplary mechanism for Subcarrier Allocation;
Figure 10      shows a method of encoding a binary data stream for wireless transmission in accordance with an embodiment;
Figure 11      presents an example of an overlap-save-orthogonal filtered delay Doppler modulation (OS-OF2DM) receiver in accordance with an embodiment;
Figure 12a     presents a first mechanism for extracting active carriers;
Figure 12b     presents a second mechanism for extracting active carriers;
Figure 12c     presents a second mechanism for extracting active carriers;
Figure 13      shows an exemplary decoder implementation in accordance with a first embodiment;
Figure 14      shows an exemplary decoder implementation in accordance with a second embodiment;
Figure 15      provides an explanatory example of the partitioning operation of the second decoder implementation;
Figure 16      provides an explanatory example of the concatenation operation of the second decoder implementation;
Figure 17      presents a method of processing delay-Doppler modulated binary data stream for decoding in accordance with an embodiment;
Figure 18      presents a computer suitable for carrying out a method according to an embodiment; and
Figure 19      presents a base station 1900 incorporating computer suitable for carrying out a method according to an embodiment.

## Detailed description

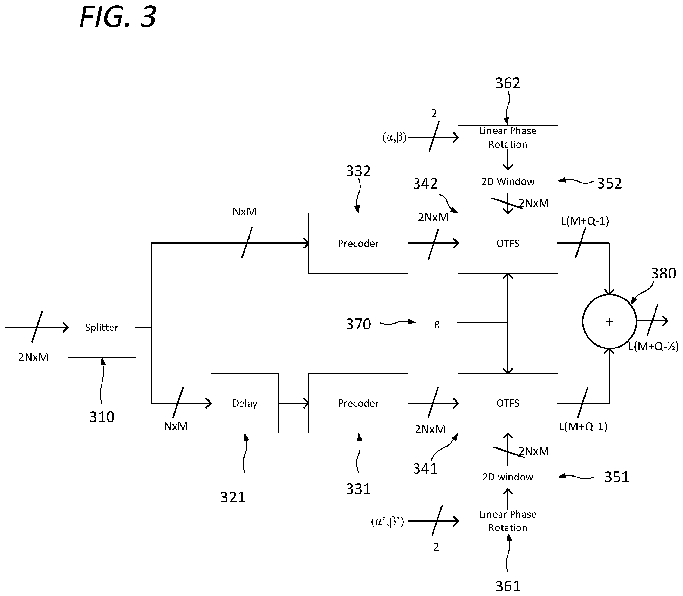

Given the merits of the OTFS waveform and the FBMC transmitter, it is desired to design a new waveform that can harness the advantages of both FBMC and OTFS waveforms, in order to capitalize on their respective advantages. This would involve achieving improved spectral confinement, supporting asynchronous communications, enhancing robustness, enabling flexible resource allocation, and ensuring compatibility with sensing applications. To the best of our knowledge, this is the first time that a waveform is proposed with the ability to leverage the advantages of FBMC, OTFS and OQAM. This is simply not possible through simple concatenation. Indeed, new constituent blocks are proposed and designed in order to guarantee orthogonality of the resulting waveform and in order to enable the efficient association of a subset of modified FBMC building blocks with modified ones from OTFS and OQAM. Figure 3 depicts the proposed transceiver. The proposed scheme starts by dividing the QAM symbols into two parts. Opposed to state-of-the-art solutions that propose precoding techniques to restore complex orthogonality during the shift from an OFDM to a FBMC-based system, we propose two precoding schemes aimed at maintaining real orthogonality. It is thereby ensured that the output of the ISFFT processing block consists of real-valued symbols. Let

| | |
|---|---|
| $\mathbb{X} \in \mathbb{C}^{N \times M}$ | Eq. 6 |

represent the matrix of QAM symbols, where $M$ is the number of Doppler/time bins and $N$ is the total number of Delay/frequency bins at the input of the encoder. The entry at delay index $n$ and Doppler bin $m$ is denoted as $x(n, m)$.

Figure 3 presents a modulation system in accordance with an embodiment.

In accordance with embodiments complex symbols e.g. in a QAM encoding scheme are permuted in a certain manner to maintain real orthogonality. The complex symbols in this approach are permuted in a certain manner to maintain real orthogonality.

The resulting waveform may be referred to as "orthogonal frequency delay Doppler modulation" (OF2DM, with its corresponding block diagram shown in Figure 3. It comprises eight constituent blocks, each of which will be elaborated upon in the subsequent description.

**Splitter**

As shown, incoming signals are first processed by splitter block 310. This processing block operates on an input complex valued matrix of dimension $2N \times M$, where $M$ corresponds to the number of Doppler/time bins and $N$ denotes the number of Delay/frequency bins at the input of the encoder. Consequently, the splitter yields two matrices as output, each sized $N \times M$, effectively separating the input matrix into two distinct streams for further processing independently in two different tracks as depicted in Figure 3.

**Delay**

The delay block 321 is strategically positioned either in the first or second track, offering the flexibility to be placed at the beginning or end of the track. It functions to introduce a delay to the signal, precisely half the duration of a symbol. Taking the lower track, with elements numbered with values ending in "1" as the first track, as shown delay block 321 is provided in the first track, but could equally be provided in the second.

The delay may advantageously be performed together with the step of combining the two parallel complex substreams as discussed below to obtain the data stream, which will tend to reduce overall hardware complexity.

After splitting and (as the case may be delay), each stream reaches precoding block 331, 332. In accordance with the present invention, various precoding operations may be envisaged in accordance with the overarching objectives of the invention.

Specifically, as opposed to state-of-the-art solutions that propose precoding techniques to restore complex orthogonality during the shift from an OFDM to a FBMC-based system, embodiments call for precoding schemes aimed at maintaining real orthogonality. Thereby ensuring that the subsequent OTFS processing may be performed on the basis of real-valued symbols. It is crucial to note that the design of the precoder is intricately linked with a 2D linear phase rotation (LPR) (block number 4), which operates based on the two input parameters $(\alpha, \beta)$ as discussed below. The interdependence between these two blocks will be detailed below along with the two precoder implementations.

By way of example, two possible such precoding block architectures will now be presented.

**First exemplary precoding approach**

In accordance with the present invention, the precoding and 2D linear phase rotation operations are defined such that the input to the filter bank consists of real-valued symbols. Two exemplary implementations achieving this requirement are presented below.

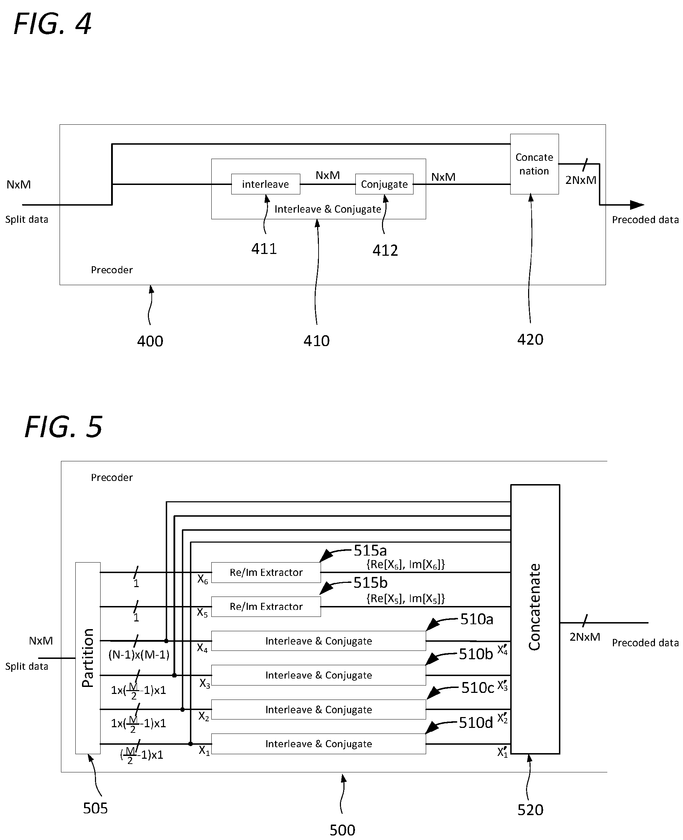

Figure 4 shows a first precoder implementation in accordance with an embodiment.

As shown in figure 4, a precoder block 400 comprises an interleaver and conjugate block 410, comprising, sequentially, interleaver block 411 and conjugate block 412. The operations performed by these blocks are described further below.

As discussed above a complex symbol substream is split into a plurality of successive batches, each said batch defining an input matrix X in figure 4 of size $N \times M$.

The interleaver block 411 restructures each batch in a specified manner. In particular, let X be a matrix of size $N \times M$, which serves as the input to the interleaver block. The interleaver operates by rearranging the elements of X. Mathematically, the entry $X_p(n. m)$ in the resulting interleaved matrix $X_p$ is defined as

$$X_p(n, m) = x(N - n - 1, M - m - 1) \qquad \text{Eq. 7}$$

where $0 \leq m \leq M - 1, 0 \leq n \leq N - 1$.

By way of example, if the input batch defines the following matrix, with $N = 6$ and $M = 4$,

$$\begin{bmatrix} 1 & 2 & 3 & 4 \\ 5 & 6 & 7 & 8 \\ 9 & 10 & 11 & 12 \\ 13 & 14 & 15 & 16 \\ 17 & 18 & 19 & 20 \\ 21 & 22 & 23 & 24 \end{bmatrix}$$

The output of the interleaving operation will be:

$$\begin{bmatrix} 24 & 23 & 22 & 21 \\ 20 & 19 & 18 & 17 \\ 16 & 15 & 14 & 13 \\ 12 & 11 & 10 & 9 \\ 8 & 7 & 6 & 5 \\ 4 & 3 & 2 & 1 \end{bmatrix}$$

In other terms, the operation performed by the interleaver block 411 can be seen as flipping the matrix in both the x and y axes.

The conjugate block 412 involves a conjugate operation that is applied to the output of the interleaver resulting in a matrix denoted as $X_p$.

Continuing the previous example, the output of the conjugating operation will be denoted:

$$\begin{bmatrix} 24^* & 23^* & 22^* & 21^* \\ 20^* & 19^* & 18^* & 17^* \\ 16^* & 15^* & 14^* & 13^* \\ 12^* & 11^* & 10^* & 9^* \\ 8^* & 7^* & 6^* & 5^* \\ 4^* & 3^* & 2^* & 1^* \end{bmatrix}$$

Block 400 further comprises a concatenation block 420. Concatenation block 420 concatenates the matrix $X_p$ with the original matrix X, resulting in the precoded matrix $\mathbb{C} \in \mathbb{C}^{2N \times M}$

$$\mathbb{C} = \begin{bmatrix} X_p \\ X \end{bmatrix} \qquad \text{Eq. 8}$$

Continuing the previous example, the output of the concatenation block 420 may be denoted:

$$\begin{bmatrix} 1 & 2 & 3 & 4 \\ 5 & 6 & 7 & 8 \\ 9 & 10 & 11 & 12 \\ 13 & 14 & 15 & 16 \\ 17 & 18 & 19 & 20 \\ 21 & 22 & 23 & 24 \\ 24^* & 23^* & 22^* & 21^* \\ 20^* & 19^* & 18^* & 17^* \\ 16^* & 15^* & 14^* & 13^* \\ 12^* & 11^* & 10^* & 9^* \\ 8^* & 7^* & 6^* & 5^* \\ 4^* & 3^* & 2^* & 1^* \end{bmatrix}$$

Figure 5 shows a second precoder implementation in accordance with an embodiment. This approach involves multiple steps wherein the complex symbols within the matrix X are rearranged in a specific manner to maintain real orthogonality.

As shown, a plurality of interleaver and conjugate blocks 510a, 510b, 510c, 510d are provided, each corresponding in function to block 410 as described above.

In this embodiment, each interleaver and conjugate block 510a, 510b, 510c, 510d processes a respective part of the input matrix as provided by partitioning block 505.

Partitioning block 505 operates to divide the input matrix $X$ into sub-matrices of varying sizes.

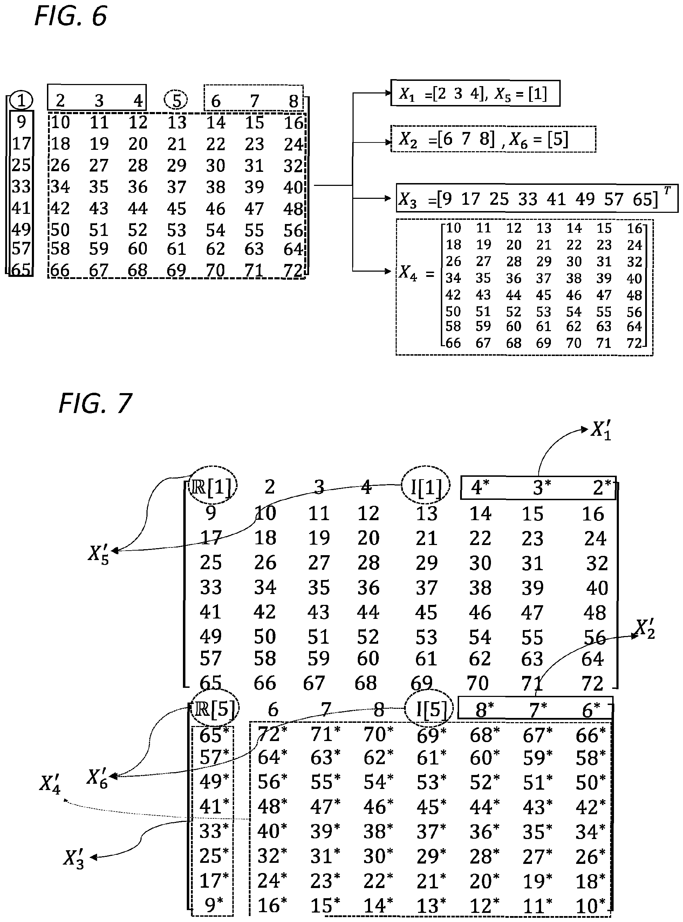

Figure 6 presents details of a partitioning operation in accordance with an embodiment.

As shown in figure 6, in accordance with an embodiment, an input matrix $X$ of dimensions $M = 8$, $N = 9$, is partitioned into six sub-matrices denoted as $X_1$, $X_2$, $X_3$ $X_4$, $X_5$, $X_6$ of distinct sizes.

Specifically, as shown in figure 6, a first submatrix $X_1$ of size 3, or for an arbitrary $N \times M$ matrix of size $1 \times \left( \frac{M}{2} - 1 \right)$ corresponding to column positions 1 to M/2-1 of row 0 of the input matrix X is provided.

A second submatrix $X_2$ of size 3, or for an arbitrary $N \times M$ matrix of size $1 \times \left( \frac{M}{2} - 1 \right)$ corresponding to column positions M/2+1 to M-1 of row 0, is provided.

A third submatrix $X_3$ of size 8, or for an arbitrary $N \times M$ matrix of size $1 \times (N - 1)$ corresponding to row positions 1 to $N-1$ of column 0, is provided.

A fourth submatrix $X_4$ of size 8x7, or for an arbitrary $N \times M$ matrix of size $(N - 1) \times (M - 1)$ corresponding to the remaining positions not otherwise provided for, is provided.

A fifth submatrix $X_5$ of size 1 corresponding to the position row 0 column 0, is provided.

A sixth submatrix $X_6$ of size 1 corresponding to the position row 0 column M/2, is provided.

Reverting to figure 5, as shown the first, second, third, and fourth submatrices $X_1$, $X_2$, $X_3$, $X_4$ are fed to respective interleaver and conjugate blocks 510a, 510b, 510c, 510d to obtain respective conjugate matrices $X'_1$, $X'_2$, $X'_3$, and $X'_4$

Meanwhile, the fifth and sixth submatrices $X_5$, $X_6$, are fed to respective real and imaginary part extractor blocks 515a, 515b, which provide as outputs respective matrices for the real and imaginary parts of the fifth and sixth submatrices $X_5$, $X_6$, denoted $\{Re[X_5], Im[X_5]\}$, $\{Re[X_6], Im[X_6]\}$.

In accordance with the embodiment of figure 6, the first four original submatrices, $X_1$, $X_2$, $X_3$, $X_4$, conjugate matrices $X'_1$, $X'_2$, $X'_3$, and $X'_4$, and the real and imaginary parts of the fifth and sixth submatrices $Re[X_5]$, $Im[X_5]$, $Re[X_6]$, $Im[X_6]$ are provided to concatenation block 520. Concatenation block 520 performs substantially the same operation as concatenation block 420 as described above, but is configured to concatenate the various components as shown with a specific structure in line with the objections of the invention.

Figure 7 presents the structure of the output of the concatenation.

As shown, as a result of the concatenation operation, the output matrix comprises in sequence,

- row 0, columns 0 to $M -1$: R[0,0], columns positions 1 to $M /2$-1 of the first row of the input matrix, I[0,0], $X'_1$.
- Row 1 to $N -1$, columns 0 to $M -1$: all the elements of the input matrix apart from elements of its first row.
- Row $N$, columns 0 to $M-1$: R[0, $M /2$], elements M/2+1 to M-1 of the first row of the input matrix, I[0, $M/2$], $X'_2$
- Row N+1 to row 2N-1, column 0: the elements of $X'_3$,
- Remaining positions: $X'_4$

Accordingly, two possible implementations of the precoder block 331, 332 of figure 3 have been presented as possible solutions (in combination with corresponding 2D linear phase rotation stages as discussed below) whereby the criterion of performing precoding and the 2D linear phase rotation such that the input to the filter bank consists of real-valued symbols is respected. The skilled person will recognize that further implementations may be available, but that it is not practicable to attempt to specify all such solutions in the present disclosure. The two solutions presented as such constitute non-limiting examples.

Reverting to the discussion of figure 3, the output of each precoder block 331, 332 is fed to a respective Orthogonal time frequency space (OTFS) block, which performs orthogonal time frequency space encoding of the incoming data matrices generally as discussed in the introductory portion above.

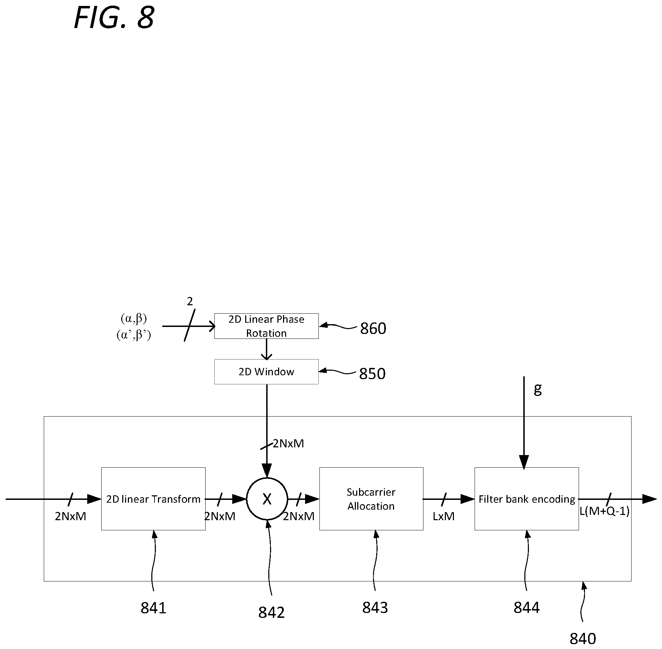

Figure 8 presents in detail components of the OTFS block in accordance with an embodiment.

OTFS block 840 operates directly on the output matrix of dimension $2N \times M$.

As shown, OTFS block 840 comprises a 2D linear transform block 841, multiplier 842, subcarrier allocation block 843 and FBMC modulation block 844. The functions of these elements are described in further detail below.

The OTFS initiates its processing with 2D linear transform block 841. For instance, an IFFT of size ($M$) can be first applied row-wise on the precoded matrix. An FFT of size (2N) can be then applied column wise. The order of the FFT and the IFFT may be interchanged.

As discussed above, the design of the precoder 331, 332 is intricately linked with the 2D Linear Phase Rotation 860 corresponding to elements 361 or respectively 362 as discussed above. The 2D LPR is parameterized by $\alpha$ and $\beta$ for a first track as shown in figure 3, defined as:

$$W_N^\alpha \, W_M^\beta = \left[ exp\left(\frac{2i\pi\alpha n}{N}\right) exp\left(\frac{2i\pi\beta m}{M}\right) \right]_{n\in[0,2N-1],m\in[0,M-1]} \qquad \text{Eq. 9}$$

As shown, the Linear Phase rotation is performed via multiplier 842, which applies the $2N \times M$ parameters thus obtained to the output of the 2D linear Transform block 841.

The second track in figure 3 operates in the same way and employs the same values of $\alpha$ and, but the 2D LPR window is modified by the phase factor $e^{i\frac{\pi}{2}} = i$ as follows:

$$i \times \boldsymbol{W_N^\alpha} \, \boldsymbol{W_M^\beta} \qquad \text{Eq. 10}$$

In the context of employing the first precoding scheme as described with reference to figure 4, the values of $\alpha$, $\beta$, are set as follows:

$$\alpha = \frac{N+1}{4}; \; \beta = \frac{M-1}{2} \qquad \text{Eq. 11}$$

Optional windowing block 850 (corresponding to blocks 351 and 352 of figure 3) may be provided subsequent to 2D LPR rotation block 860. Windowing block 850 may multiply the outputs of the 2D LPR rotation block 860 by the impulse response of the prototype filter g. As known in the art, this windowing has the potential to enhance robustness against time-frequency impairments or mitigate interferences.

The output of multiplier 842 is fed to Subcarrier Allocation block 843. In this block, the output from the previous block is allocated to the active subcarriers.

It will be appreciated that the number of active subcarriers $2N$ is one of the system parameters that an engineer can choose based on the application. "c" is then chosen accordingly. For example: in 4G/LTE communication systems configured for transmissions in 5 MHz channels, the total number of subcarriers is $L$ = 512, and the number of active carriers is $2N$ = 300.

This can be done using different methods, of which three possibilities are presented below.

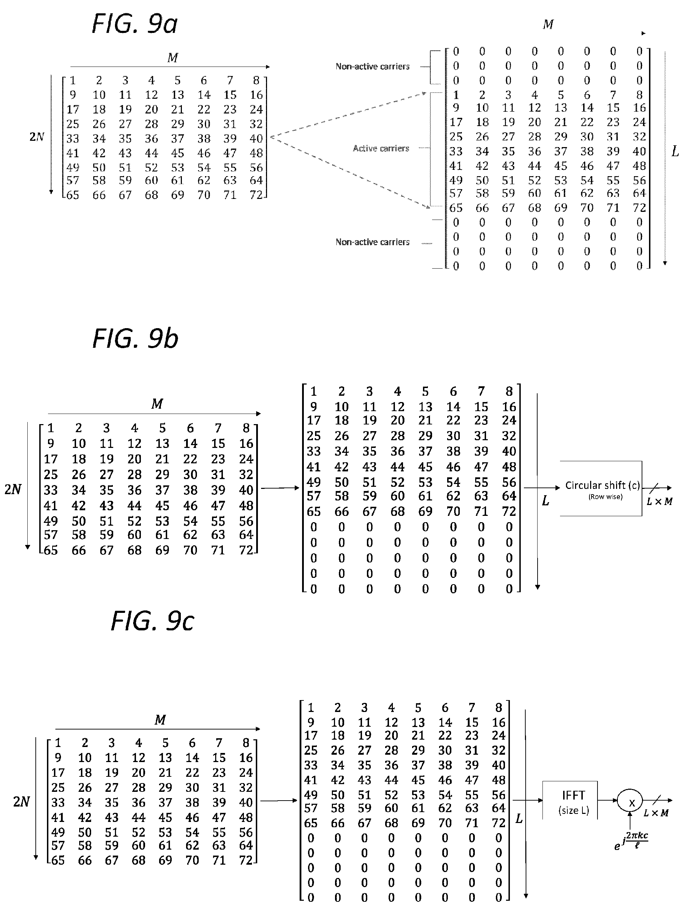

Figure 9a presents a first exemplary mechanism for Subcarrier Allocation.

As shown, this first technique involves applying zero padding a fixed number of rows at the top and bottom of the original matrix, depending on the index of the first active carrier. Specifically as shown, the number of subcarriers L is equal to 16, and the fourth to twelfth rows are active, and attributed respectively to rows 1 to $2N$ of the Matrix received from multiplier 842. The first three rows and last four rows are zero padded.

Thus, optionally, there may be provided a further step of performing subcarrier allocation by applying zero padding at the top and bottom of the precoded matrix, depending on the index of the first active subcarrier.

Figure 9b presents a second exemplary mechanism for Subcarrier Allocation.

As shown, zero padding may be applied either at the bottom or top of the matrix, followed by a circular shift of *c* values based on the index of the first subcarrier. Specifically, as shown, the number of subcarriers L is equal to 14, and the first to ninth rows are active, subject to the circular shift such that at a given instant, if *c* = 3, then the active carriers will be from 3 to 11. and attributed respectively to rows 0 to 2N-1 of the Matrix received from multiplier 842. The last five rows are zero padded, and the resulting matrix is then subjected to a row wise circular shift.

Figure 9c presents a third exemplary mechanism for Subcarrier Allocation.

Since a circular shift in the frequency domain equates to a time shift in the time domain, another option involves applying a time shift to the original matrix after conducting an IFFT operation. Consequently, the output in all aforementioned methods yields a matrix of dimensions $L \times M$, where $L \geq 2N$. Specifically, as shown, the number of subcarriers L is equal to 14, and the first to ninth rows are active subject to the circular shift such that at a given instant, if *c* = 3, then the active carriers will be from 3 to 11, and attributed respectively to rows 0 to 2N-1 of the matrix received from multiplier 842. The last five rows are zero padded, and the resulting matrix is then subjected to a time shift $e^{j2\pi\frac{ck}{\ell}}$ .

As discussed above, the design of the precoder 331, 332 is intricately linked with the 2D Linear Phase Rotation 860 corresponding to elements 361 or respectively 362 as discussed above. The 2D LPR is parameterized by $\alpha$ and $\beta$ for a first track and by $\alpha'$ and $\beta'$ for a second track, as shown in figure 3 and defined by equations 9 and 10, respectively, as discussed above.

In the context of employing the second precoding scheme as described with reference to figures 5 to 7, the values of $\alpha, \beta, \alpha'$, and $\beta'$ are set as follows:

$$\alpha = \frac{N}{4}; \ \beta = \frac{M}{4} \qquad \qquad \text{Eq. 13}$$

$$\alpha' = \alpha; \ \beta' = \beta \qquad \qquad \text{Eq. 14}$$

The output of Subcarrier Allocation block 843 is then fed to Filter Bank Encoding block 844.

Many Filter Bank Encoding methods may be envisaged. One suitable family of technologies is referred to as FBMC modulation as discussed above, and will be retained by way of example for the following explanations, however the skilled person will recognize that other such encoding schemes may be used, including schemes yet to be defined, or yet to be named.

FBMC modulation may be performed by any architecture as may readily occur to the skilled person, such as a Polyphase Network (PPN) or Frequency Spread (FS) implementation.

In particular, the PPN approach calls for, in sequence an Inverse Fast Fourier Transform (IFFT) unit, a filtering stage and a serializer. The result of the IFFT manipulates the sub-carriers following the equation:

$$s_k(\ell) = \sum_{l=0}^{L-1} x_k(l) e^{i\frac{2\pi l \ell}{L}} \qquad \qquad \text{Eq. 15}$$

where $x_k(l)$ is the data element at subcarrier index *l* and time slot *k,* and *L* is the total number of subcarriers.

The filtering stage, corresponds to a filtering operation carried out on the OF2DM symbols. Specifically, the filtering operation is described as follows:

$$x_k(l) = \sum_{q=0}^{Q-1} g(l + qL) s_k \left( l + \frac{L}{2}(2q + k) \right) \qquad \qquad \text{Eq. 16}$$

where g(k) is the impulse response of the prototype filter with overlapping factor *Q* and length *QL*. It is noteworthy that when employing a short prototype filter with an Overlapping Factor Q = 1 the filtering operation can be seen as a windowing operation. In other words, the outputs of the IFFT are simply multiplied by the impulse response of the prototype filter.

Finally, the data is serialized.

A Frequency Spread (FS) implementation may comprise in sequence an FIR filter, an IFFT block and a serializer. The basic idea behind this design is to move the filtering process into the frequency domain. This approach is expected to entail higher hardware complexity compared to the initial implementation, especially for longer filters (K > 1). Specifically, it necessitates an IFFT of size $QL$. However, when dealing with a short filter (Q=1), the size of the IFFT remains identical to that of the Polyphase Network (PPN) implementation.

The embodiments above have been presented in terms of a system comprising a number of functional blocks. It will be appreciated that real implementations may implement the described functions in any number of components, including a single, suitably configured component. It will similarly be appreciated that the distribution of functions between real components need not correspond to the functional blocks described above - certain functions may be combined, while others may be split, etc. Some or all parts of the two processing paths described with respect to figure 3 may in some embodiments by handled by a single hardware pipeline operating in a time division multiplexed mode.

Embodiments may also be defined in terms of a method.

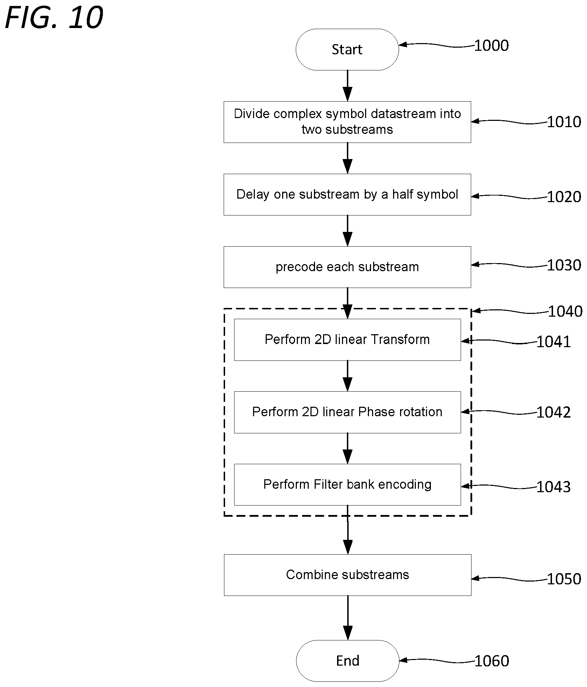

In particular, figure 10 shows a method of encoding a binary data stream for wireless transmission in accordance with an embodiment.

As shown in figure 10, the method starts at step 1000 before proceeding to step 1010 at which a complex symbol data stream is divided into two parallel complex symbol substreams,

The method then proceeds to step 1020 at which a delay equal to half the duration of a symbol of the complex symbol data stream is introduced to one complex symbol substream,

The method then proceeds to step 1030 of performing precoding on each complex symbol substream.

The method then proceeds to step 1040 of performing an OTFS encoding of each complex symbol substream, which comprises in sequence the substep 1041 of performing a 2D linear transform, 1042 of performing a 2D linear phase rotation, and 1043 of performing a filter bank encoding, wherein the precoding and the 2D linear phase rotation are defined such that the input to the filter bank consists of real-valued symbols.

The method then proceeds to step 1050 of combining the two parallel complex substreams to obtain a data stream for transmission before terminating at step 1060. It will be appreciated that the method may typically loop back to step 1010 for the next batch of symbols for processing rather than terminating at step 1060.

Accordingly, the method of figure 10 presents the core operations described with respect to figures 3 to 9 above in terms of method steps. The method may incorporate additional steps as suggested by any of the variants and optional features discussed above.

For example, based on the foregoing embodiments and in particular the first exemplary precoding implementation described with reference to figure 4, precoding step 1030 may comprise in sequence the further substeps 1031 (not shown) of splitting each substream into a plurality of successive batches, each batch defining an input matrix X of size $N \times M$, and interleaving the input matrix to obtain an interleaved matrix defined as $X_p[n, m] = X[N - n - 1, M - m - 1]$, where $0 \leq m \leq M - 1, 0 \leq n \leq N - 1$, $N$ and $M$ represent the number of rows and columns, respectively, of the input matrix X; 1032 (not shown) of performing a conjugate operation on the interleaved matrix to obtain a conjugate interleaved matrix and 1033 (not shown) of concatenating the input matrix with the conjugate interleaved matrix to obtain a precoded matrix of size $2N \times M$.

Furthermore, based on the foregoing embodiments and in particular the first exemplary precoding implementation described with reference to figure 4, the step of performing OTFS encoding may comprise performing a two dimensional windowing that includes a two dimensional linear phase rotation wherein the two dimensional linear phase rotation is defined by equation 9 in view of equation 11 for the complex symbol substream incorporating no delay, and by equation 10 in view of equation 12 for the said complex symbol substream incorporating the delay.

Alternatively, based on the foregoing embodiments and in particular the second exemplary precoding implementation described with reference to figure 5, The method step of precoding may further comprise, for each complex symbol substream, splitting each substream into a plurality of successive batches, each batch defining an input matrix X of size N $\times$ M, partitioning the input matrix into a plurality of input submatrices, interleaving each input submatrix to obtain an interleaved submatrix defined as $X_p[n, m] = X[N - n - 1, M - m - 1]$, where $0 \leq m \leq M - 1, 0 \leq n \leq N - 1$, $N$ and $M$ represent the number of rows and columns, respectively, of the input matrix $X$, performing a conjugate operation on the interleaved submatrices to obtain a conjugate interleaved matrix and concatenating the input matrix with the conjugate interleaved matrix to obtain a precoded matrix of size $2N \times M$.

Furthermore, based on the foregoing embodiments and in particular the second exemplary precoding implementation described with reference to figure 4, the method may comprise a further step of partitioning the input matrix into a plurality of input submatrices, as follows:

- a first submatrix $X_1$, of size $1 \times \left(\frac{M}{2} - 1\right)$ corresponding to row 0, column positions 1 to $M/2-1$,

- a second submatrix $X_2$ of size $1 \times \left(\frac{M}{2} - 1\right)$ corresponding to row 0, column positions $M/2+1$ to $M-1$,

- a third submatrix $X_3$ of size 1 × (N - 1) corresponding to column 0, row positions 1 to N-1
- a fifth submatrix $X_5$ of size 1 corresponding to the position row 0 column 0
- a sixth submatrix $X_6$ of size 1 corresponding to the position row 0 column M/2 and
- a fourth submatrix $X_4$ of size (N - 1) × (M - 1) corresponding to the remaining positions,

On this basis, the step of partitioning may comprise the further step of separating the 5th submatrix to obtain the real part R[0,0] and imaginary part I[0,0], and separating the 6th submatrix to obtain the real part R[0, M/2] and imaginary part I[0, M/2], such that at the output of the interleaving provides respective interleaved elements $X'_1$, $X'_2$, $X'_3$, $X'_4$ R[0,0], I[0,0], R[0, M/2] and I[0, M/2].

Accordingly, as discussed above, the result of concatenating the precoded matrix of size $2N \times M$ may comprise in sequence,

- row 0, columns 0 to *M-1:* R[0,0], columns positions 1 to M/2-1 of the first row of the input matrix, I[0,0], $X'_1$.
- Row 1 to N-1, columns 0 to *M-1:* all the elements of the input matrix apart from elements of its first row.
- Row N, columns 0 to *M-1:* R[0, M/2], elements M/2+1 to M-1 of the first row of the input matrix, I[0, M/2], $X_2'$.
- Row N+1 to row 2N-1, column 0: the elements of $X'_3$
- Remaining positions: $X'_4$

Furthermore, based on the foregoing embodiments and in particular the second exemplary precoding implementation described with reference to figure 4, the step of performing OTFS encoding may comprise performing a two dimensional linear phase rotation of the concatenated interleaved matrix and reading out the values of the concatenated interleaved matrix as an interleaved data stream, and performing a windowing operation by the application of Finite Impulse Response digital filter with an Overlapping Factor of 1 to obtain an encoded data stream, wherein the two dimensional linear phase rotation is defined by equation 9 in view of equation 13 for the complex symbol substream incorporating no delay, and by equation 10 in view of equation 14 for the complex symbol substream incorporating the delay.

Optionally, as discussed above, the step of introducing a delay may be performed together with the step of combining the two parallel complex substreams to obtain a data stream.

Optionally, as discussed above, the method may comprise a further operation of windowing subsequent to the step performing the linear phase rotation.

Optionally, as discussed above, the method may comprise a further step of performing subcarrier allocation by zero padding at the bottom or top of the precoded matrix and performing a circular shift of *c* values based on the index of the first active subcarrier.

Optionally, as discussed above, the method may comprise a further step of performing subcarrier allocation by applying an Inverse Fast Fourier Transform to the original matrix and multiplying the $\ell^{th}$ sample of the resulting signal by $e^{j2\pi\frac{ck}{\ell}}$ .

It should be noted that this does not necessarily imply the presence of an additional separate IFFT, since the IFFT operation may be subsumed by the IFFT called for elsewhere in certain implementations of the filter bank encoder.

Optionally, as discussed above, the operation of performing OTFS encoding may comprise performing FBMC encoding.

Accordingly, a system and method of encoding a binary data stream for wireless transmission combining characteristics of OFDM and FBMC type systems is proposed, based on a precoding schemes adapted to maintaining real orthogonality so that the output of the OTFS processing consists of real-valued symbols. The precoder is intricately linked to the definition of a subsequent 2D linear phase rotation. Two possible precoder architectures are proposed, in which interleaver and conjugate operations process partwise or en bloc the incoming data matrix, before the original matrix is concatenated with the interleaved and conjugated matrix (or its components) to obtain a new matrix for subcarrier allocation and filter bank encoding prior to transmission.

The proposed embodiments substantially simplify receiver complexity with respect for example to figure 2, while concurrently enhancing system performance over doubly dispersive channels. Simulations conducted over the TDL-B model of the 5G QuaDRiGa channel illustrate that the proposed technique outperforms OTFS-OFDM under different channel impairments including timing offsets, and Doppler spreads.

In accordance with the foregoing, embodiments may be defined in accordance with the following sections referenced with a roman numeral.

I. There is accordingly presented, for example, a method of encoding a binary data stream for wireless transmission, said method comprising the steps of:

dividing a complex symbol data stream into two parallel complex symbol substreams,

introducing a delay equal to half the duration of a symbol of said complex symbol data stream to one said complex symbol substream,

performing precoding on each complex symbol substream

performing an OTFS encoding of each said complex symbol substream

said operation of performing an OTFS encoding comprising the steps of

performing a 2D linear transform,

performing a 2D linear phase rotation, and

performing a filter bank encoding,

wherein said precoding and said 2D linear phase rotation are defined such that the input to said filter bank consists of real-valued symbols, and

combining said two parallel complex substreams to obtain a data stream for transmission.

II. Thus, in certain variants of the method of section I for example said step of precoding may comprise

for each said complex symbol substream, splitting said substream into a plurality of successive batches, each said batch defining an input matrix X of size $N \times M$, and
interleaving said input matrix to obtain an interleaved matrix defined as $X_p[n, m] = X[N-n-1, M-m-1]$, where $0 \leq m \leq M-1$, $0 \leq n \leq N-1$, $N$ and $M$ represent the number of rows and columns, respectively, of the input matrix $X$
performing a conjugate operation on said interleaved matrix to obtain a conjugate interleaved matrix and,
concatenating said input matrix with said conjugate interleaved matrix to obtain a precoded matrix of size $2N \times M$.

III. Thus, in certain variants of the method of section II for example said step of performing OTFS encoding may comprise performing a two dimensional windowing that includes a two dimensional linear phase wherein said two dimensional linear phase rotation comprises

$$W_N^\alpha \, W_M^\beta = \left[ exp\left(\frac{2i\pi\alpha n}{N}\right) exp\left(\frac{2i\pi\beta m}{M}\right) \right]_{n \in [0, 2N-1], m \in [0, M-1]}$$

Wherein

$$\alpha = \frac{N+1}{4} ; \ \beta = \frac{M-1}{2}$$

for the said complex symbol substream incorporating no delay, and $iW_N^\alpha \, W_M^\beta$ for the said complex symbol substream incorporating said delay.

IV. Thus, in certain variants of the method of section I the step of precoding may comprise for each said complex symbol substream, splitting said substream into a plurality of successive batches, each said batch defining an input matrix X of size $N \times M$, and partitioning said input matrix into a plurality of input submatrices,

interleaving each said input submatrix to obtain a respective interleaved submatrix defined as $X_p[n, m] = X[N-n-1, M-m-1]$, where $0 \leq m \leq M-1$, $0 \leq n \leq N-1$, $N$ and $M$ represent the number of rows and columns, respectively, of the input matrix X preforming a conjugate operation on each said interleaved submatrices to obtain a respective conjugate interleaved matrix and,
concatenating said input matrix with said conjugate interleaved submatrices to obtain a precoded matrix of size $2N \times M$.

V. Thus, in certain variants of the method of section IV for example the step of partitioning said input matrix into a plurality of input submatrices may define

a first submatrix $X_1$ of size $1 \times \left(\frac{M}{2} - 1\right)$ corresponding to row 0, column positions 1 to $M/2$-1,

a second submatrix $X_2$ of size $1 \times \left(\frac{M}{2} - 1\right)$ corresponding to row 0, column positions $M/2$+1 to $M$-1,

a third submatrix $X_3$ of size $1 \times (N - 1)$ corresponding to column 0, row positions 1 to $N$-1
a fifth submatrix $X_5$ of size 1 corresponding to the position row 0 column 0
a sixth submatrix $X_6$ of size 1 corresponding to the position row 0 column M/2 and
a fourth submatrix $X_4$ of size $(N - 1) \times (M - 1)$ corresponding to the remaining positions,
and wherein said step of partitioning comprising the further step of separating said 5th submatrix to obtain the real part R[0,0] and imaginary part I[0,0], and separating said 6th submatrix to obtain the real part R[0, M/2] and imaginary part I[0, M/2], such that at the output of said interleaving provides respective interleaved elements $X'_1$, $X'_2$, $X'_3$, $X'_4$ R[0,0], I[0,0], R[0, M/2] and I[0, M/2].and where as a result of said step of concatenation said precoded matrix of size $2N \times M$ comprises in sequence,

- row 0, columns 0 to $M$ - 1: R[0,0], columns positions 1 to $M/2$ - 1 of the first row of the input matrix, I[0,0], $X'_1$.
- Row 1 to $N$ - 1, columns 0 to $M$ - 1: all the elements of the input matrix apart from elements of its first row.
- Row $N$, columns 0 to $M$ - 1: R[0, $M/2$], elements M/2 + 1 to $M$ - 1 of the first row of the input matrix, I[0, $M/2$], $X'_2$.
- Row $N$ + 1 to row $2N$ - 1, column 0: the elements of $X'_3$,
- Remaining positions: $X'_4$

VI. Thus, in certain variants of the method of section IV or V for example the step of performing OTFS encoding may comprise performing a two dimensional linear phase rotation of said concatenated interleaved matrix and reading out the values of said concatenated interleaved matrix as an interleaved data stream, and performing a windowing operation by the application of Finite Impulse Response digital filter with an Overlapping Factor of 1 to obtain an encoded data stream, wherein said two dimensional linear phase rotation comprises

$$W_N^\alpha\, W_M^\beta = \left[ exp\left(\frac{2i\pi\alpha n}{N}\right) exp\left(\frac{2i\pi\beta m}{M}\right)\right]_{n\in[0,2N-1], m\in[0,M-1]}$$

Wherein

$$\alpha = \frac{N}{4};\ \beta = \frac{M}{4}$$

for the said complex symbol substream incorporating no delay, and $iW_N^\alpha\, W_M^\beta$ for the said complex symbol substream incorporating said delay.

VII. Thus, in certain variants of the method of any of sections I to VI for example the step of introducing a delay may be performed together with said step of combining said two parallel complex substreams to obtain a said data stream.

VIII. Thus, certain variants of the method of any of sections I to VII for example may comprise a further operation of windowing subsequent to said step performing said linear phase rotation.

IX. Thus, certain variants of the method of any of sections I to VIII for example may comprise a further step of performing subcarrier allocation by applying zero padding at the top and bottom of the precoded matrix, depending on the index of the first active subcarrier.

X. Thus, certain variants of the method of any of I to IX for example may comprise a further step of performing subcarrier allocation by zero padding at the bottom or top of the precoded matrix and performing a circular shift of c values based on the index of the first active subcarrier.

XI. Thus, certain variants of the method of any of sections I to IX for example may comprise a further step of performing subcarrier allocation by applying an Inverse Fast Fourier Transform to the original matrix and multiplying the $\ell^{th}$ sample of the resulting signal by $e^{i2\pi\frac{ck}{\ell}}$ .

XII. Thus, in certain variants of the method of any of sections I to XI for example said operation of performing OTFS encoding may comprise performing FBMC encoding.

XIII. There is accordingly presented, for example, a computer program comprising instructions which, when the program is executed by a computer, cause the computer to carry out the method of any of sections I to XII.

XIV. There is accordingly presented, for example, computer-readable medium comprising instructions which, when executed by a computer, cause the computer to carry out the method of any of sections I to XII.

XV. There is accordingly presented, for example, a data encoder for the preparation of a binary data stream for wireless transmission, said encoder comprising:

a splitter configured to dividing a complex symbol data stream into two parallel complex symbol substreams,
a delay block configured to introduce a delay equal to half the duration of a symbol of said complex symbol data stream to one said complex symbol substream,
a precoder for each complex symbol substream configured to perform a precoding operation, an OTFS encoder configured to perform an OTFS encoding of each said complex symbol substream, wherein said operation of performing an OTFS encoding comprises

performing a 2D linear transform,
performing a 2D linear phase rotation, and
performing a filter bank encoding,

wherein said precoding and said 2D linear phase rotation are defined such that the input to said filter bank consists of real-valued symbols,
and further comprising a concatenator configured to combine said two parallel complex substreams to obtain a data stream for transmission.

The described encoding methods and transmitter architectures can be understood to imply corresponding decoding methods and receiver architectures. Examples of these will now be presented.

As discussed above, despite the promising outcomes observed when combining the delay-Doppler modulated (e.g. OTFS) and FBMC waveforms into a unified framework, known receiver implementations require a high computational complexity to address inter-symbol interference (ISI) and inter-carrier interference (ICI). The combination of FBMC and delay-Doppler modulated type approaches in a unified structure employing straightforward equalization methods and offset quadrature amplitude modulation (OQAM). This equalizer may be termed an overlap-save-orthogonal filtered delay Doppler modulation (OS-OFDDM) receiver.

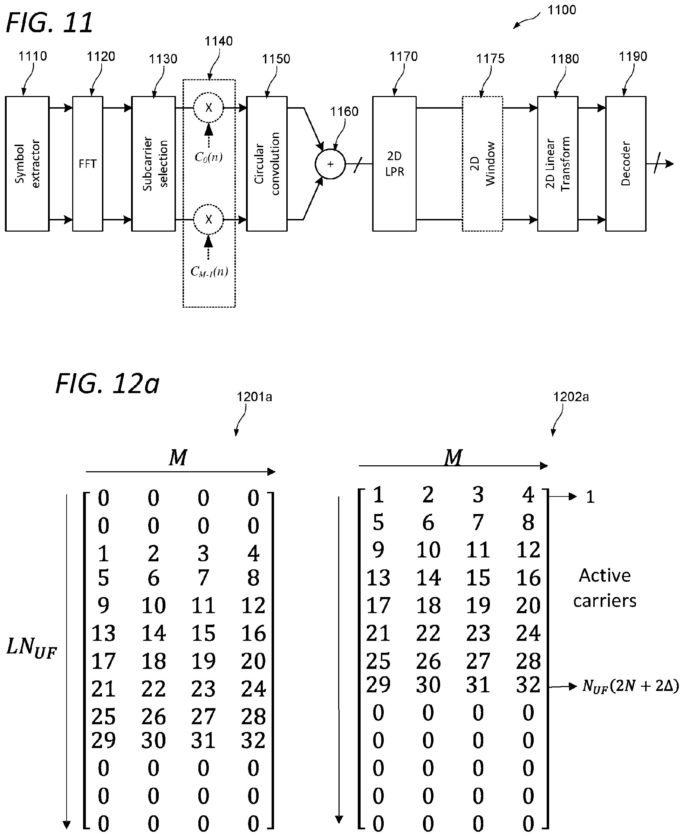

Figure 11 presents an example of an overlap-save-orthogonal filtered delay Doppler modulation (OS-OFDDM) receiver in accordance with an embodiment.

As shown, the receiver 1100 comprises in sequence from the input, a symbol extractor 1110, a Fast Fourier transform module 1120, a subcarrier selection module 1130, a circular convolution module 1150, a summer 1160, a linear phase rotation module 1170, a 2D linear transform 1180 and a decoder 1190.

There are additionally provided an equalizer 1140 and a 2D Window function 1175.

The operations of each of these functions will be described individually in the following discussion.

Symbol extractor.

The receiver begins its processing by extracting a matrix of OF2DM symbols sized $LN_{UF} \times M$ at symbol extractor 1110, where $M$ denotes the total number of Doppler bins, and $L$ represents the total number of subcarriers. Here, $N_{UF}$ serves as the upsampling factor for the receiver processing. Within this matrix, each column represents a sequence of OF2DM symbols, with the symbol intended for demodulation positioned at the center of its respective sequence.

Fast Fourier Transform

The next block 1120 involves applying a fast Fourier transform (FFT) of size $LN_{UF}$ on each extracted sequence from the previous step.

Subcarrier selection

In this block 1130 the data on the active carriers, that is to say, the carriers that have been loaded with data on the transmitter side, are extracted. This significantly reduces computational complexity by excluding unnecessary processing of inactive carriers, i.e. the carriers which weren't loaded with data at the transmitter side. In contrast, processing the entire set of subcarriers without extraction necessitates higher complexity, as it involves analyzing redundant information that will ultimately be discarded.

The set of active carriers may be predefined, so as to be known to both the transmitter and the receiver. Therefore, the receiver does not need to guess or check which carriers are active; this information may be available beforehand.

This can be achieved using different approaches, of which three examples will be presented below.

Figure 12a presents a first mechanism for selecting active subcarriers.

A shown, this mechanism involves applying a time shift $c$ (multiplying *by* $e^{-\frac{i2\pi ck}{l}}$) to each column in the original matrix 1201a followed by applying an FFT operation of size $LN_{UF}$ and selecting the active subcarriers from the first index to a total of $N_{UF}(2N + 2\Delta)$ carriers to obtain output matrix 1202a. As defined previously, $N$ is the total number of Delay/frequency bins at the precoding input domain and $\Delta$ denotes the number of non-truncated filter coefficients.

As such, this represents the inverse operation of that described with respect to figure 9c.

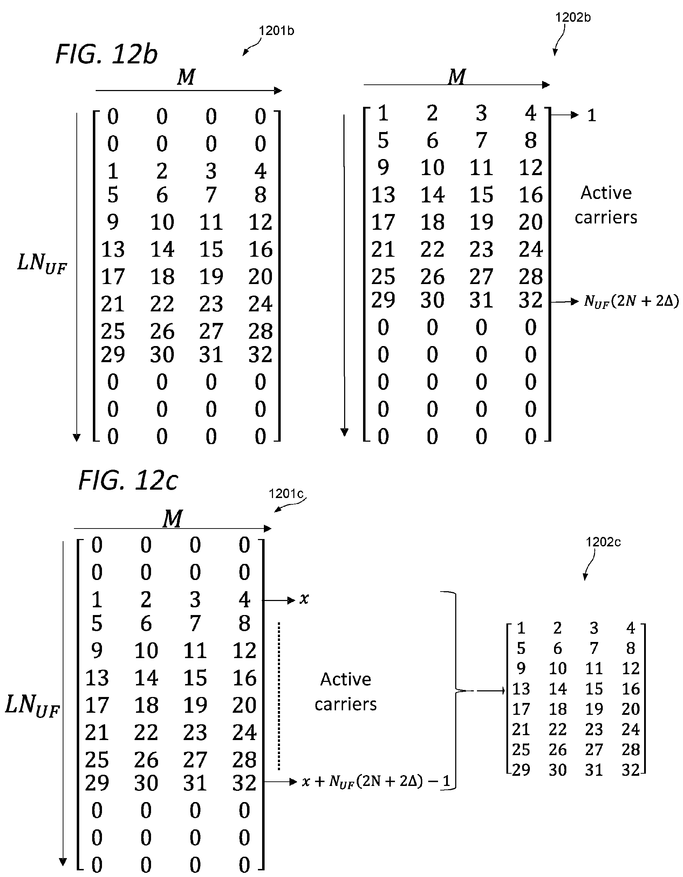

Figure 12b presents a second mechanism for selecting active subcarriers.

Since a phase shift in the time domain equates to a circular shift in the frequency domain, a circular shift of $c$ values based on the index of the first subcarrier can be directly applied row-wise to the input matrix 1201b, followed by selecting the active subcarriers, as depicted in figure 12b to obtain output matrix 1202b.

As such, this represents the inverse operation of that described with respect to figure 9b.

Figure 12c presents a second mechanism for selecting active subcarriers.

Another straightforward approach involves selecting the active subcarriers from the input matrix 1201c directly based on the first subcarrier to select indexed by $x$ and the total number of subcarriers $N_{UF}(2N + 2\Delta)$, as shown in Figure 12c, such that the index of the first subcarrier to select is

$$x = mod(N_{UF}(i_a - 1 - \Delta) + 1)$$

where $i_a$ is the index of the first subcarrier index to obtain output matrix 1202c.

As such, this represents the inverse operation of that described with respect to figure 9a.

It will be appreciated that regardless of the channel assignment mechanism used in the transmitter, for example as discussed with reference to figures 9a, 9b and 9c, any suitable mechanism for selection, such as those described with reference to figures 12a, 12b or 12c may be used indifferently.

Equalization

Block number 1140 involves an optional equalization step. The received signal is corrupted by channel effects which can be removed by equalization. This involves multiplying each received symbol by equalizer coefficients $C_m(n)$ as follows

$$\boldsymbol{X}_m(n) = \boldsymbol{C}_m(n) \times \boldsymbol{R}_m(n)$$

The specific values of $C_m(n)$ depend on the equalizer method employed. For a zero forcing (ZF) equalizer, the coefficients are determined as

$$\boldsymbol{C}_m(n) = \boldsymbol{H}_m^{-1}(n)$$

On the other hand, for a minimum mean square error (MMSE) equalizer, the coefficients are calculated as follows

$$\boldsymbol{C}_m(n) = \frac{\boldsymbol{H}_m(n)^*}{\|\boldsymbol{H}_m(n)\|^2 + \sigma^2}$$

where $\sigma^2$ is the noise variance.

It will be appreciated that equalization is not required in all implementations, since, for example it is possible to pre-compensate the channel effect at the transmitter side if it is known.

Circular convolution

The fifth operation at block 1150 involves a circular convolution operation, where $N_{UF}$ stages of circular convolution by the frequency shifted responses of the prototype filter (PF) is performed on $X_m(n)$. Thus, the output of each filtering stage vector is

$$Y_m(n, \ell) = \sum_{p=-\Delta}^{\Delta} G_\ell(p) X_m(\ell + (n - p) N_{UF})$$

where $\Delta$ denotes the number of non-truncated filter coefficients as defined above, and G is the frequency shifted response of the PF deduced from its impulse response g as

$$G_\ell(p) = e^{i\frac{\pi\ell}{N_{UF}}} \sum_{k=0}^{M-1} g(k) \, e^{i\frac{2\pi\ell(k-\frac{M}{2})}{N}} e^{-i\frac{2\pi pk}{M}}$$

Summer

The Analysis Filter Bank (AFB) output $Y_m(n)$, $n \in [0, N\text{-}1]$, is obtained by summing each filtering stage vector outputs as follows

$$Y_m(n) = \sum_{\ell=0}^{N_{UF}-1} Y_m(n, \ell)$$

2D Linear phase rotation

A 2D linear phase rotation (2D-LPR) is directly applied at block number 1170 to the AFB output matrix Y of dimension $N \times M$. Consistently with the transmitter embodiments as described above, the window coefficients of the 2D Linear Phase Rotation in the receiver are intricately linked with the decoder design used, and as such will be discussed in more detail below in association with the corresponding decoder designs.

2D windowing

An optional windowing operation may be included as shown at block 1175
This function takes as input a $2N \times M$ matrix where an element-wise multiplication is applied with another $2N \times M$ matrix that corresponds to the window coefficients. This element-wise matrix multiplication is often referred to as "Hadamard product". The window coefficients are defined by an expert engineer and aims to reduce interference or improve the performance of the system when facing specific channel conditions. The output is also a $2N \times M$ matrix.
Since blocks 1170 and 1175 perform the same type of operations, they can be "merged" into a single block performing an overall 2D windowing operation that includes both the engineer defined window coefficients of block 1175 and the 2D LPR coefficients as defined in Block 1170.

2D linear transform

A 2D linear transformation is now applied at block 1180 on the output matrix from the previous operation. Any 2D linear transform serving to transform the input samples represented in Time-Frequency domain to output samples represented in Delay-Doppler domain may be performed.
One exemplary implementation may involve starting with a row-wise IFFT of size $M$, followed by a column-wise FFT of size $2N$. The order of FFT and IFFT may be exchanged.

Decoder

The final stage in the OS-OF2DM receiver at block 1190 involves decoding. It is crucial to note that the design of the decoder is intricately linked with a 2D linear phase rotation (LPR) (block number 1170), which operates based on the two input parameters $(\alpha, \beta)$. The interdependence between these two blocks will be detailed below along with the two decoder implementations.

First decoder implementation

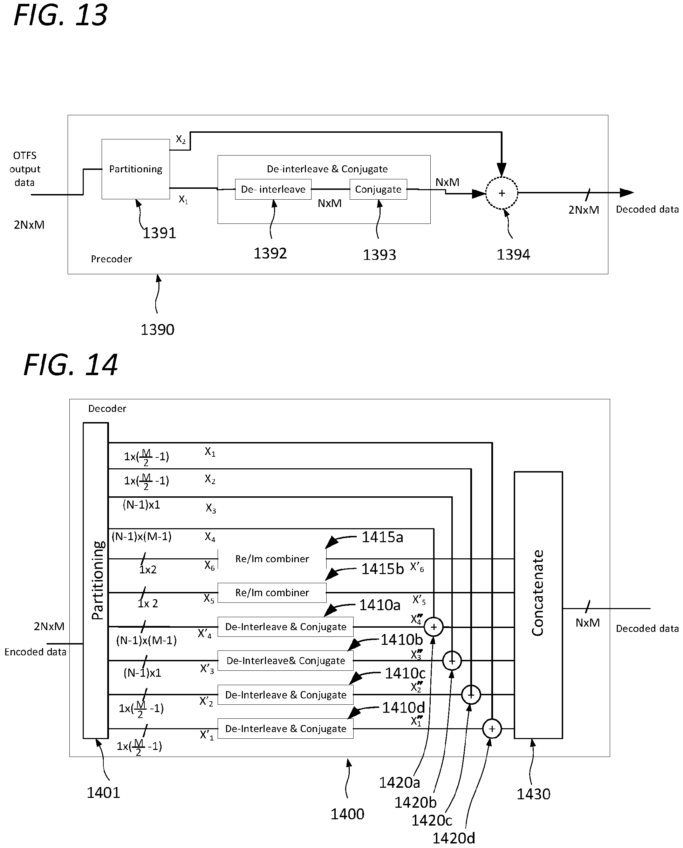

Figure 13 shows an exemplary decoder implementation in accordance with a first embodiment.

As shown in figure 13, an exemplary decoder 1390 comprises sequential operations of partitioning 1391, de-interleaving 1392 and conjugation 1393 followed by summer 1394 with the objective of extracting the received data. These operations are described in further detail below.

Partitioning

The partitioning block 1391 divides a $2N \times M$ matrix output by 2D linear transform 1180 for example into two parts.
By way of example, if the input batch defines the following matrix, with $N = 6$ and $M = 4$,

$$\begin{bmatrix} 1 & 2 & 3 & 4 \\ 5 & 6 & 7 & 8 \\ 9 & 10 & 11 & 12 \\ 13 & 14 & 15 & 16 \\ 17 & 18 & 19 & 20 \\ 21 & 22 & 23 & 24 \\ 24^* & 23^* & 22^* & 21^* \\ 20^* & 19^* & 18^* & 17^* \\ 16^* & 15^* & 14^* & 13^* \\ 12^* & 11^* & 10^* & 9^* \\ 8^* & 7^* & 6^* & 5^* \\ 4^* & 3^* & 2^* & 1^* \end{bmatrix}$$

The output of the partitioning operation will be a first matrix $X_2$:

$$\begin{bmatrix} 1 & 2 & 3 & 4 \\ 5 & 6 & 7 & 8 \\ 9 & 10 & 11 & 12 \\ 13 & 14 & 15 & 16 \\ 17 & 18 & 19 & 20 \\ 21 & 22 & 23 & 24 \end{bmatrix}$$

And a second matrix $X_1$:

$$\begin{bmatrix} 24^* & 23^* & 22^* & 21^* \\ 20^* & 19^* & 18^* & 17^* \\ 16^* & 15^* & 14^* & 13^* \\ 12^* & 11^* & 10^* & 9^* \\ 8^* & 7^* & 6^* & 5^* \\ 4^* & 3^* & 2^* & 1^* \end{bmatrix}$$

It may be noted that this is precisely the converse to the concatenation operation described with reference to figure 4 above.

De-interleaver

The elements $\widehat{x_1}(n, m)$ of the output matrix $X_1$ of block 1391 are rearranged at block 1392 using the following de-interleaving process:

$$\widehat{x_1}(n, m) = x_1(nN - n - 1, M - m - 1)$$

Where $0 \leq m \leq M$ - 1, and $0 \leq n \leq N$ - 1
Continuing the previous example, starting from the matrix $X_1$

$$\begin{bmatrix} 24^* & 23^* & 22^* & 21^* \\ 20^* & 19^* & 18^* & 17^* \\ 16^* & 15^* & 14^* & 13^* \\ 12^* & 11^* & 10^* & 9^* \\ 8^* & 7^* & 6^* & 5^* \\ 4^* & 3^* & 2^* & 1^* \end{bmatrix}$$

The output of the interleaving operation will be:

$$\begin{bmatrix} 1^* & 2^* & 3^* & 4^* \\ 5^* & 6^* & 7^* & 8^* \\ 9^* & 10^* & 11^* & 12^* \\ 13^* & 14^* & 15^* & 16^* \\ 17^* & 18^* & 19^* & 20^* \\ 21^* & 22^* & 23^* & 24^* \end{bmatrix}$$

Conjugate

Block 1393 involves a conjugate operation which is applied to the output of the interleaver resulting in a matrix denoted as $X_p$.

Adder

Block 1394 entails combining the partitioned data, referred to as $X_2$, with the de-interleaved and conjugated data matrix $X_p$ to produce the decoded data matrix.
Processing the complete dataset before partitioning the input matrix is feasible.
However, this approach leads to increased computational complexity because it requires analyzing redundant information that will eventually be discarded.

Linear Phase Rotation for first decoder implementation

As mentioned above, the parameters of the Linear Phase Rotation are defined as a function of the details of the Decoder operation. In the case of the present example, the 2D LPR is parameterized by $\alpha$ and $\beta$, defined as:

$$W_N^\alpha \, W_M^\beta = \left[ exp\left(\frac{2i\pi\alpha k}{N}\right) exp\left(\frac{2i\pi\beta k'}{M}\right) \right]_{k\in[0,2N-1],k'\in[0,M-1]}$$

wherein

$$\alpha = \pm\frac{N+1}{4}; \ \beta = \pm\frac{M-1}{2}$$

Second decoder implementation

Figure 14 shows an exemplary decoder implementation in accordance with a second embodiment.
As shown in figure 14, an exemplary decoder 1400 comprises a Partitioning module 1401 which operates to divide the input matrix of size 2NxM into sub-matrices of varying sizes.
Specifically, as shown the partitioning module breaks up each input matrix as follows:

a first submatrix $X_1$ of size $1 \times \left(\frac{M}{2} - 1\right)$

a second submatrix $X_1$' of size $1 \times \left(\frac{M}{2} - 1\right)$

a third submatrix $X_2$ of size $1 \times \left(\frac{M}{2} - 1\right)$

a fourth submatrix $X_2$' of size $1 \times \left(\frac{M}{2} - 1\right)$

a fifth submatrix $X_3$ of size $(N - 1) \times 1$

a sixth submatrix $X_3$' of size $(N - 1) \times 1$

a seventh submatrix $X_5$ of size $1 \times 2$

a eighth submatrix $X_6$ of size $1 \times 2$

a ninth submatrix $X_4$ of size $(N - 1) \times (M - 1)$

a tenth submatrix $X_4'$ corresponding to the remaining positions,

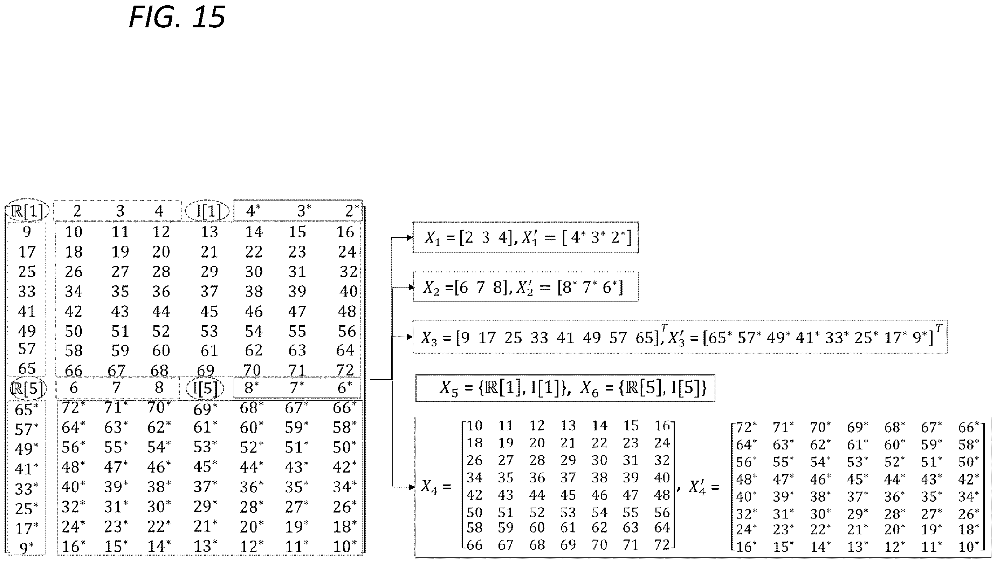

Figure 15 provides an explanatory example of the partitioning operation of the second decoder implementation.

As shown in figure 15, the first submatrix $X_1$ of size $1 \times \left(\frac{M}{2} - 1\right)$ corresponds to row position 0, column positions 1 to $M/2 - 1$.

The second submatrix $X_1$' of size $1 \times \left(\frac{M}{2} - 1\right)$ corresponds to row position 0, column positions $M/2 + 1$ to $M - 1$.

The third submatrix $X_2$ of size $1 \times \left(\frac{M}{2} - 1\right)$ corresponds to row position $N$, column positions 1 to M/2 - 1,

The fourth submatrix $X_2$' of size $1 \times \left(\frac{M}{2} - 1\right)$ corresponds to row position N, column positions M/2 + 1 to $M - 1$,

The fifth submatrix $X_3$ of size $(N - 1) \times 1$ corresponds to column position 0, row position 1 to $N - 1$ the sixth submatrix $X_3$' of size $(N - 1) \times 1$ corresponds to column position 0, row position $N + 1$ to $2N - 1$

This process results accordingly in ten sub-matrices denoted as $X_1, X_2, X_3, X_4, X_5, X_6, X_1', X_2', X_3', X_4', X_5', X_6'$ of distinct sizes, as depicted. Each of the resulting sub-matrices from this block undergoes unique processing.

In particular, the elements of said 7th and 8th submatrices are added to obtain $X_5$' and $X_6$' respectively, as the real and imaginary parts of a single respective symbol by real/imaginary combiner 1415a and 1415b respectively.

The function of the real/imaginary combiner may be understood as follows. If for example, we have a real part of '3' and an imaginary part of '5', the combiner will combine these two values to form the complex number 3+5i

A de-interleaving operation on said submatrices $X_1$', $X_2$', $X_3$', and $X_4$' to obtain de-interleaved matrices and performing a conjugate operation on said de-interleaved sub-matrices to obtain conjugate de- interleaved sub-matrices denoted as $X_1$", $X_2$", $X_3$", and $X_4$", these two operations being performed by De-interleave and conjugate modules 1410a, 1410b, 1410c and 1410d respectively. Each De-interleave and conjugate module corresponds to the De-interleave and conjugate modules 1392 and 1393 as discussed above.

The conjugate de- interleaved sub-matrices as $X_1$", $X_2$", $X_3$", and $X_4$", are added to other said second subjects $(X_1, X_2, X_3, X_4)$, by respective adders 1420a, 1420b, 1420c and 1420d respectively resulting in submatrices denoted as $Y_1$, $Y_2$, $Y_3$, and $Y_4$.

Finally, concatenation module 1430 concatenates the previous outputs $X_5$', $X_6'$, $Y_1$, $Y_2$, $Y_3$, and $Y_4$ to obtain said post decoded matrix of size $N \times$ M comprises in sequence:

- Row 0: $X_5$', $Y_1$, $X_6'$, $Y_2$.
- Rows 1 to N-1, column 0: $Y_3$
- Remaining positions: $Y_4$

This last block 1430 entails concatenating the submatrices obtained from the previous step, resulting in the decoded matrix of size $N \times M$.

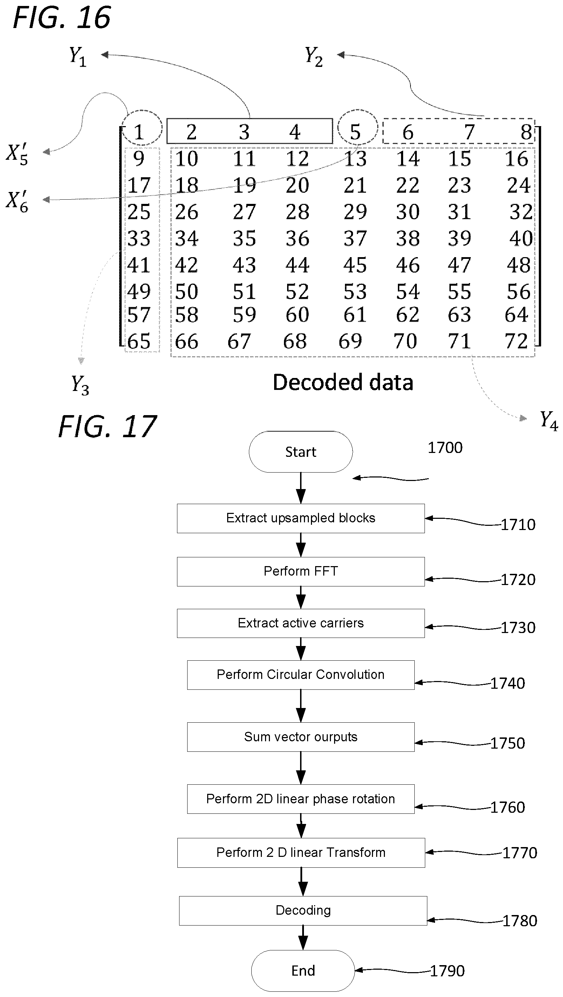

Figure 16 provides an explanatory example of the concatenation operation of the second decoder implementation.

As shown, the new concatenated matrix of dimensions N $\times$ M comprises a first row formed from, in sequence from the first to last column, the submatrix $X_5$' (1 element), $Y_1$ *(1x((M/2)-1)* elements), $X_6$' (1 element), $Y_2$ (1x((M/2)-1) elements), a first row comprising submatrice the submatrix $X_5$' (1 element) and $Y_3$ (*N* -1x1) elements), and the remaining positions corresponding to submatrix $Y_4$ ((*N* -1)×(*M*-1) elements).

The Matrix output by the concatenator thus constitutes the final decoded data output for the current extract from the received data.

Linear Phase Rotation for second decoder implementation

As mentioned above, the parameters of the Linear Phase Rotation are defined as a function of the details of the Decoder operation. In the case of the present example, the 2D LPR is parameterized by $\alpha$ and $\beta$, defined as:

$$W_N^{\alpha} \, W_M^{\beta} = \left[ exp\left(\frac{2i\pi\alpha k}{N}\right) exp\left(\frac{2i\pi\beta k'}{M}\right) \right]_{k\in[0,2N-1],k'\in[0,M-1]}$$

Wherein

$$\alpha = \pm\frac{N}{4}; \; \beta = \pm\frac{M}{4}$$

The preceding embodiments have been presented in terms of a receiver architecture. It will be appreciated that other embodiments may be presented in terms of a method of processing.

Figure 17 presents a method of processing delay-Doppler modulated binary data stream for decoding in accordance with an embodiment.

Specifically, as shown in figure 17 the method delay-Doppler modulated binary data stream for decoding, said binary data stream modulated with a defined Prototype Filter and comprising blocks of L subchannels, *M* Doppler/time bins and *N* Delay/frequency bins.

The method starts at step 1700 before proceeding to step 1710 of extracting a predetermined number *M* of successive upsampled blocks of size $LN_{UF}$ where $N_{UF}$ is the upsampling factor from said data stream, for example as discussed with respect to block 1110 of figure 11 above. The method next proceeds to step 1720 of performing a fast Fourier transform of size $LN_{UF}$ on the extracted block, for example as discussed with respect to block 1120 of figure 11 above.

The method next proceeds to step 1730 of extracting the upsampled subcarriers from the output of said upsampled fast Fourier transform, for example as discussed with respect to block 1130 of figure 11 above.

The method then proceeds to step 1740 of performing a circular convolution on each extracted upsampled subcarrier, for example as discussed with respect to block 1150 of figure 11 above. More particularly, the circular convolution is performed such that $N_{UF}$ stages of circular convolution are performed by the frequency shifted responses of the prototype filter on each respective extracted upsampled subcarrier value to obtain respective vector outputs $Y_m(n, \ell)$ defined as:

$$Y_m(n, \ell) = \sum_{p=-\Delta}^{\Delta} G_{\ell}(p) X_m(\ell + (n-p)N_{UF})$$

where $\Delta$ denotes the number of non-truncated filter coefficients, and G is the frequency shifted response of the Prototype Filter PF deduced from its impulse response g as

$$G_{\ell}(p) = e^{i\frac{\pi\ell}{N_{UF}}} \sum_{k=0}^{M-1} g(k) \, e^{i\frac{2\pi\ell(k-\frac{M}{2})}{N}} e^{-i\frac{2\pi pk}{M}}$$

The method then proceeds to step 1750 of summing the vector outputs $Y_m(n, \ell)$ to obtain a $2N \times M$ Filter bank output $Y_m(n)$ for example as discussed with respect to block 1160 of figure 11 above. More particularly, the summation is performed as

$$Y_m(n) = \sum_{\ell=0}^{N_{UF}-1} Y_m(n, \ell)$$

The method next proceeds to step 1760 of performing a 2D linear phase rotation for example as discussed with respect to block 1170 of figure 11 above.

The method next proceeds to perform a 2D linear transform at step 1770 for example as discussed with respect to block 1180 of figure 11 above. More particularly, the 2D linear transform is such as to transform the input samples represented in Time-Frequency domain to output samples represented in Delay-Doppler domain.

Finally, the method proceeds to perform a postprocessing operation, wherein said postprocessing operation comprises a corresponding decoding operation for said delay-Doppler modulation on said $2N \times M$ matrix of Filter bank outputs to obtain an $N \times M$ output data matrix and where said postprocessing operation and said 2D linear phase rotation are defined such that the output to said postprocessing operation, consists of orthogonal complex-valued symbols.

Accordingly, the method of figure 17 presents the core operations described with respect to figures 11 to 16 above in terms of method steps. The method may incorporate additional steps as suggested by any of the variants and optional features discussed above.

For example, the 2D linear transform may comprise a row-wise IFFT of size $M$, followed by a column-wise FFT of size $2N$, or a column-wise FFT of size $2N$ followed by a row-wise IFFT of size $M$, on said $2N \times M$ matrix.

The 2D linear phase rotation may comprise

$$W_N^\alpha\, W_M^\beta = \left[ exp\left(\frac{2i\pi\alpha k}{N}\right) exp\left(\frac{2i\pi\beta k'}{M}\right) \right]_{k\in[0,2N-1],k'\in[0,M-1]}$$

Where $\alpha$ and $\beta$ must be chosen to have orthogonal complex-valued symbols at the output of the decoder, and where the sign of the $(\alpha, \beta)$ coefficients must be the opposite of the ones used in the 2D windowing step performed for transmitting data.

The method may further comprise a further step of associating a 2D window operation with said 2D linear phase rotation comprising applying an element-wise multiplication of the elements of the 2NxM matrix processed by said 2D linear phase rotation with another $2N \times M$ matrix that corresponds to predefined respective window coefficients.

The step of postprocessing may comprise, in coherence with the first exemplary implementation presented above, partitioning an intermediate 2NxM matrix output by said filter bank decoding operation, into a first submatrix comprising elements the last N rows of said intermediate 2NxM matrix and a second submatrix comprising the remaining first N rows of said intermediate 2NxM matrix,

performing a de-interleaving operation on said first submatrix to obtain a de-interleaved matrix defined as $X_p[n, m] = X[N - n - 1, M - m - 1]$, where $0 \le m \le M - 1$, $0 \le n \le N - 1$, $N$ and $M$ represent the number of rows and columns, respectively, of the first submatrix,

performing a conjugate operation on said de-interleaved first sub-matrix to obtain a conjugate de-interleaved first sub-matrix and,

adding said conjugate de-interleaved first sub-matrix to said second subject.

In which case, the 2D linear phase rotation may comprise

$$W_N^\alpha\, W_M^\beta = \left[ exp\left(\frac{2i\pi\alpha k}{N}\right) exp\left(\frac{2i\pi\beta k'}{M}\right) \right]_{k\in[0,2N-1],k'\in[0,M-1]}$$

wherein

$$\alpha = \pm\frac{N+1}{4}; \ \beta = \pm\frac{M-1}{2}$$

In this regard, it may be borne in mind that data transmitted using the transmitter as presented with respect to figures 1 to 10, a delay is introduced to half of the symbols, which may need to be removed at the receiver side. Where this is the case, the same values of $\alpha$ and $\beta$ are used for the delayed data, however the 2D-LPR window $W_N^\alpha \, W_M^\beta$ may be adjusted by a phase shift of j.

Nevertheless, omitting this additional adjustment does not preclude successful recovery of the data at the output (i.e. keep the orthogonality intact), and can be simply addressed by a skilled engineer after receiving the decoded samples - the delayed "delay-Doppler modulated binary data stream" are "transparent" to the receiver side as they are just considered as another "delay-Doppler modulated binary data stream" to be decoded.

The step of postprocessing may comprise in coherence with the second exemplary implementation presented above, partitioning an intermediate 2NxM matrix output by said filter bank decoding operation into a plurality of input submatrices comprising:

- a first submatrix $X_1$ of size $1 \times \left(\frac{M}{2} - 1\right)$ corresponding to row position 0, column positions 1 to M/2-1,

- a second submatrix $X_1$' of size $1 \times \left(\frac{M}{2} - 1\right)$ corresponding to row position 0, column positions M/2+1 to M-1,

- a third submatrix $X_2$ of size $1 \times \left(\frac{M}{2} - 1\right)$ corresponding to row position N, column positions 1 to M/2-1,

- a fourth submatrix $X_2$' of size $1 \times \left(\frac{M}{2} - 1\right)$ corresponding to row position N, column positions M/2+1 to M-1,

- a fifth submatrix $X_3$ of size $(N - 1) \times 1$ corresponding to column position 0, row position 1 to N-1,
- a sixth submatrix $X_3$' of size $(N - 1) \times 1$ corresponding to column position 0, row position N+1 to 2N-1,
- a seventh submatrix $X_5$ of size $1 \times 2$ corresponding to the real part of row position 0 column position 0 and the imaginary part of row position 0 column position M/2,
- an eighth submatrix $X_6$ of size $1 \times 2$ corresponding to the real part of row position N column position 0 and the imaginary part of row position N, column position M/2,
- a ninth submatrix $X_4$ of size $(N - 1) \times (M - 1)$ corresponding to row positions 1 to $N - 1$, column positions 1 to $M - 1$,
- a tenth submatrix $X_4$' corresponding to the remaining positions,

and the step of partitioning may comprise the further steps of:

- adding the elements of said 7th and 8th submatrices to obtain $X_5$' and $X_6$' respectively,
- performing a de-interleaving operation on said submatrices $X_1$', $X_2$', $X_3$', and $X_4$' to obtain de-interleaved matrices,
- performing a conjugate operation on said de-interleaved sub-matrices to obtain conjugate de- interleaved sub-matrices denoted as $X_1$", $X_2$", $X_3$", and $X_4$", and adding said conjugate de- interleaved sub-matrices to other said second subjects ($X_1$, $X_2$, $X_3$, $X_4$), resulting in submatrices denoted as $Y_1$, $Y_2$, $Y_3$, and $Y_4$ and, the further step of concatenating the previous outputs ($X_5$', $X_6$', $Y_1$, $Y_2$, $Y_3$, and $Y_4$) to obtain said post decoded matrix of size $N \times M$ comprises in sequence:

  ◦ Row 0: $X_5$', $Y_1$, $X_6$', $Y_2$.
  ◦ Rows 1 to N-1, column 0: $Y_3$
  ◦ Remaining positions: $Y_4$.

In which case, the 2D linear phase rotation may correspondingly comprise

$$W_N^\alpha \, W_M^\beta = \left[ exp\left(\frac{2i\pi\alpha k}{N}\right) exp\left(\frac{2i\pi\beta k'}{M}\right) \right]_{k \in [0, 2N-1], k' \in [0, M-1]}$$

Wherein

$$\alpha = \pm\frac{N}{4}; \; \beta = \pm\frac{M}{4}$$

In this regard, it may be borne in mind that data transmitted using the transmitter as presented with respect to figures 1 to 10, a delay is introduced to half of the symbols, which may need to be removed at the receiver side. Where this is the case, the same values of $\alpha$ and $\beta$ are used for the delayed data, however the 2D-LPR window $W_N^\alpha \, W_M^\beta$ may be adjusted by a phase shift of i.

The method may comprise a further step of performing subcarrier extraction by performing a circular shift of *c* values based on the index of the first active subcarrier, and selecting the active subcarriers from the first index to a total of $N_{UF}(2N + 2\Delta)$. Here, $\Delta$ denotes the number of non-truncated filter coefficients.

The method may comprise a further step of performing subcarrier extraction by multiplying the $\ell^{th}$ sample of each column in the received signal by $e^{j2\pi\frac{ck}{\ell}}$ followed by applying the fast Fourier Transform of size $LN_{UF}$, and selecting the subcarriers from the first index to a total of $N_{UF}(2N + 2\Delta)$.

The method may comprise a further step of performing active subcarrier extraction by directly extracting the active subcarriers based on the initial active carriers index x and the total number of subcarriers $N_{UF}(2N + 2\Delta)$, such that $x = mod(N_{UF}(i_a - 1 - \Delta) + 1)$.

It will be appreciated that while embodiments have been described in terms of a receiver on one hand and a transmitter on the other, real systems will typically comprise both receiver and transmitter functionality. Such systems may combine any variant of the receiver implementation one hand with any variant of the transmitter implementation on the other.

In accordance with the foregoing, embodiments may be defined in accordance with the following sections referenced with a roman numeral.

XVI. There is accordingly presented, for example, a method of processing delay-Doppler modulated binary data stream for decoding, said binary data stream modulated with a defined Prototype Filter and comprising blocks of *L* subchannels, *M* Doppler/time bins and *N* Delay/frequency Bins said method comprising the steps of:

extracting a predetermined number *M* of successive upsampled blocks of size $LN_{UF}$ where $N_{UF}$ is the upsampling factor from said data stream,

performing a Fast Fourier transform of size $LN_{UF}$ on the extracted block,

extracting the upsampled active carriers from the output of said upsampled Fast Fourier transform,

performing a circular convolution on each extracted upsampled active carrier, such that $N_{UF}$ stages of circular convolution are performed by the frequency shifted responses of the prototype filter on each respective extracted upsampled active carrier value to obtain respective vector outputs $Y_m(n,\ell)$ defined as:

$$Y_m(n, \ell) = \sum_{p=-\Delta}^{\Delta} G_\ell(p) X_m(\ell + (n - p)N_{UF})$$

where $\Delta$ denotes the number of non-truncated filter coefficients, and G is the frequency shifted response of the Prototype Filter PF deduced from its impulse response g as

$$G_\ell(p) = e^{i\frac{\pi\ell}{N_{UF}}} \sum_{k=0}^{M-1} g(k) e^{i\frac{2\pi\ell(k-\frac{M}{2})}{N}} e^{-i\frac{2\pi pk}{M}}$$

**summing** the vector outputs $Y_m(n, \ell)$ to obtain a 2N Filter bank outputs $Y_m(n)$ by

$$Y_m(n) = \sum_{\ell=0}^{N_{UF}-1} Y_m(n, \ell)$$

performing a 2D linear phase rotation,

performing a 2D linear transform to transform the input samples represented in Time-Frequency domain to output samples represented in Delay-Doppler domain, and

performing a postprocessing operation, wherein said postprocessing operation comprises a corresponding decoding operation for said delay-Doppler modulation on said $2N \times M$ matrix of Filter bank outputs to obtain an $N \times M$ output data matrix and where said postprocessing operation and said 2D linear phase rotation are defined such that the output to said postprocessing operation, consists of orthogonal complex-valued symbols.

XVII. Thus, in certain variants of the method of section XVI for example the 2D linear transform may comprise a row-wise IFFT of size M, followed by a column-wise FFT of size 2N, or a column-wise FFT of size 2N followed by a row-wise IFFT of size $M$, on said $2N \times M$ matrix.

XVIII. Thus, in certain variants of the method of any of section XVI or XVII for example, the 2D linear phase rotation may comprise

$$W_N^\alpha \, W_M^\beta = \left[ exp\left(\frac{2i\pi\alpha k}{N}\right) exp\left(\frac{2i\pi\beta k'}{M}\right) \right]_{k \in [0, 2N-1], k' \in [0, M-1]}$$

Where $\alpha$ and $\beta$ must be chosen to have orthogonal complex-valued symbols at the output of the decoder, and where the sign of the $(\alpha, \beta)$ coefficients must be the opposite of the ones used in the 2D windowing step performed for transmitting data.

XIX. Thus, in certain variants of the method of any of sections XVI to XVIII for example may comprise a further step of associating a 2D window operation with said 2D linear phase rotation comprising applying an element-wise multiplication of the elements of the $2N \times M$ matrix processed by said 2D linear phase rotation with another $2N \times M$ matrix that corresponds to predefined respective window coefficients.

XX. Thus, in certain variants of the method of any of any of sections XVI to XIX for example, said step of postprocessing may comprise

partitioning an intermediate $2N \times M$ matrix output by said filter bank decoding operation, into a first submatrix comprising elements the last $N$ rows of said intermediate $2N \times M$ matrix and a second submatrix comprising the remaining first $N$ rows of said intermediate $2N \times M$ matrix,

performing a de-interleaving operation on said first submatrix to obtain a de-interleaved matrix defined as $X_p[n, m] = X[N - n - 1, M - m - 1]$, where $0 \leq m \leq M - 1$, $0 \leq n \leq N - 1$, $N$ and $M$ represent the number of rows and columns, respectively, of the first submatrix,

performing a conjugate operation on said de-interleaved first sub-matrix to obtain a conjugate de-interleaved first sub-matrix and,

adding said conjugate de-interleaved first sub-matrix to said second subject.

XXI. Thus, in certain variants of the method of section XX for example, the 2D linear phase rotation may comprise

$$W_N^\alpha \, W_M^\beta = \left[ exp\left(\frac{2i\pi\alpha k}{N}\right) exp\left(\frac{2i\pi\beta k'}{M}\right) \right]_{k \in [0, 2N-1], k' \in [0, M-1]}$$

wherein

$$\alpha = \pm \frac{N+1}{4}; \; \beta = \pm \frac{M-1}{2}$$

XXII. Thus, in certain variants of the method of sections XIV to XVIII for example the step of postprocessing may comprise

partitioning an intermediate 2NxM matrix output by said filter bank decoding operation, into a plurality of input submatrices comprising

a first submatrix $X_1$ of size $1 \times \left(\frac{M}{2} - 1\right)$ corresponding to row position 0, column positions 1 to M/2 - 1,

a second submatrix $X_1'$ of size $1 \times \left(\frac{M}{2} - 1\right)$ corresponding to row position 0, column positions M/2 + 1 to $M$ - 1,

a third submatrix $X_2$ of size $1 \times \left(\frac{M}{2} - 1\right)$ corresponding to row position N, column positions 1 to M/2 - 1,

a fourth submatrix $X_2'$ of size $1 \times \left(\frac{M}{2} - 1\right)$ corresponding to row position N, column positions *M/2 + 1 to M - 1,*

a fifth submatrix $X_3$ of size *(N - 1)* $\times$ 1 corresponding to column position 0, row position 1 to *N - 1*

a sixth submatrix $X_3'$ of size *(N - 1)* $\times$ 1 corresponding to column position 0, row position *N + 1 to 2N - 1*

a seventh submatrix $X_5$ of size 1×2 corresponding to the real part of row position 0 column position 0 and the imaginary part of row position 0 column position M/2,

aN eighth submatrix $X_6$ of size 1×2 corresponding to the real part of row position N column position 0 and the imaginary part of row position N, column position M/2,

a nineth submatrix $X_4$ of size (*N* - 1) $\times$ *(M - 1)* corresponding to row positions 1 to *N - 1*, column positions 1 to *M - 1*,

a tenth submatrix $X_4'$ corresponding to the remaining positions;

and wherein said step of partitioning comprising the further step of adding the elements of said 7th and 8th submatrices to obtain $X_5'$ and $X_6'$ respectively,

performing a de-interleaving operation on said submatrices $X_1'$, $X_2'$, $X_3'$, and $X_4'$ to obtain de-interleaved matrices,

performing a conjugate operation on said de-interleaved sub-matrices to obtain conjugate de- interleaved sub-matrices denoted as $X_1''$, $X_2''$, $X_3''$, and $X_4''$.

adding said conjugate de- interleaved sub-matrices to other said second subjects ($X_1$, $X_2$, $X_3$, $X_4$) resulting in submatrices denoted as $Y_1$, $Y_2$, $Y_3$, and $Y_4$; and

concatenating the previous outputs ($X_5'$, $X_6'$, $Y_1$, $Y_2$, $Y_3$, and $Y_4$) to obtain said post decoded matrix of size NxM comprises in sequence:

- Row 0: $X_5'$, $Y_1$, $X_6'$, $Y_2$.
- Rows 1 to N-1, column 0: $Y_3$
- Remaining positions: $Y_4$.

XXIII. Thus, in certain variants of the method of section XXII for example the 2D linear phase rotation may comprise

$$W_N^\alpha \, W_M^\beta = \left[ exp\left(\frac{2i\pi\alpha k}{N}\right) exp\left(\frac{2i\pi\beta k'}{M}\right) \right]_{k\in[0,2N-1],k'\in[0,M-1]}$$

Wherein

$$\alpha = \pm\frac{N}{4}; \ \beta = \pm\frac{M}{4}$$

XXIV. Thus, certain variants of the method of sections XVI to XXIII for example may comprise a further step of performing active subcarrier extraction by performing a circular shift of *c* values based on the index of the first active subcarrier, and selecting the active subcarriers from the first index to a total of $N_{UF}(2N + 2\Delta)$, where $\Delta$ denotes the number of non-truncated filter coefficients.

XXV. Thus, in certain variants of the method of any of sections XVI to XXIV for example may comprise a further step of performing subcarrier extraction by multiplying the $\ell^{th}$ sample of each column in the received signal by $e^{i2\pi\frac{ck}{\ell}}$ followed by applying the Fast Fourier Transform of size $LN_{UF}$, and selecting the active carriers from the first index to a total of $N_{UF}(2N + 2\Delta)$.

XXVI. Thus, in certain variants of the method of any of sections XVI to XXV for example may comprise a further step of performing active subcarrier extraction by directly extracting the active subcarriers based on the initial active carriers index x and the total number of subcarriers $N_{UF}(2N + 2\Delta)$, such that $x = mod(N_{UF}(i_a - 1 - \Delta) + 1)$.

XXVII. There is accordingly presented, for example, a computer program comprising instructions which, when the program is executed by a computer, causes the computer to carry out the method of any of sections XVI to XXVI

XXVIII. There is accordingly presented, for example, a computer-readable medium comprising instructions which, when executed by a computer, cause the computer to carry out the method of any of sections XVI to XXVI.

XXIX. There is accordingly presented, for example, a receiver for decoding a delay-Doppler modulated binary data stream, said binary data stream modulated with a defined Prototype Filter and comprising blocks of *L* subchannels, *M* Doppler/time bins and *N* Delay/frequency Bins said receiver comprising:

a symbol extractor configured to extract a predetermined number *M* of successive upsampled blocks of size $LN_{UF}$

where $N_{UF}$ is the upsampling factor from said datastream,

a Fast Fourier Transform module configured to perform a Fast Fourier Transform of size $LN_{UF}$ on the extracted block,

a subcarrier extractor configured to extract the upsampled active carriers from the output of said upsampled Fast Fourier Transform,

a processing module configured to perform a circular convolution on each extracted upsampled active carrier, such that $N_{UF}$ stages of circular convolution are performed by the frequency shifted responses of the prototype filter on each respective extracted upsampled active carrier value to obtain respective vector outputs $Y_m(n, \ell)$ defined as:

$$Y_m(n, \ell) = \sum_{p=-\Delta}^{\Delta} G_\ell(p) X_m(\ell + (n-p)N_{UF})$$

where $\Delta$ denotes the number of non-truncated filter coefficients, and $G$ is the frequency shifted response of the Prototype Filter PF deduced from its impulse response $g$ as

$$G_\ell(p) = e^{i\frac{\pi\ell}{N_{UF}}} \sum_{k=0}^{M-1} g(k) \, e^{i\frac{2\pi\ell(k-\frac{M}{2})}{N}} e^{-i\frac{2\pi pk}{M}}$$

a summer configured to sum the vector outputs $Y_m(n, \ell)$ to obtain a $2N$ Filter bank outputs $Y_m(n)$ by

$$Y_m(n) = \sum_{\ell=0}^{N_{UF}-1} Y_m(n, \ell)$$

a phase rotation module configured to perform a 2D linear phase rotation on the output of said summer,

a linear transform, module configured to perform a 2D linear transform on the output of said phase rotation module, and

a postprocessing module, configured to perform a corresponding decoding operation for said delay-Doppler modulation on said $2N \times M$ matrix of Filter bank outputs to obtain an N×M output data matrix and where said postprocessing operation and said 2D linear phase rotation are defined such that the output to said postprocessing operation, consists of orthogonal complex-valued symbols.

The disclosed methods can take form of an entirely hardware embodiment (e.g. FPGA), an entirely software embodiment (for example to control a system according to the invention) or an embodiment containing both hardware and software elements. Software embodiments include but are not limited to firmware, resident software, microcode, etc. The invention can take the form of a computer program product accessible from a computer-usable or computer-readable medium providing program code for use by or in connection with a computer or an instruction execution system. A computer-usable or computer-readable can be any apparatus that can contain, store, communicate, propagate, or transport the program for use by or in connection with the instruction execution system, apparatus, or device. The medium can be an electronic, magnetic, optical, electromagnetic, infrared, or semiconductor system (or apparatus or device) or a propagation medium.

These methods and processes may be implemented by means of computer-application programs or services, an application-programming interface (API), a library, and/or other computer-program product, or any combination of such entities.

The inventive method can be performed by a suitably-programmed general-purpose computer or computer system, possibly including a computer network, storing a suitable program in non-volatile form on a computer-readable medium such as a hard disk, a solid state disk or a CD-ROM and executing the program using its microprocessor(s) and memory.

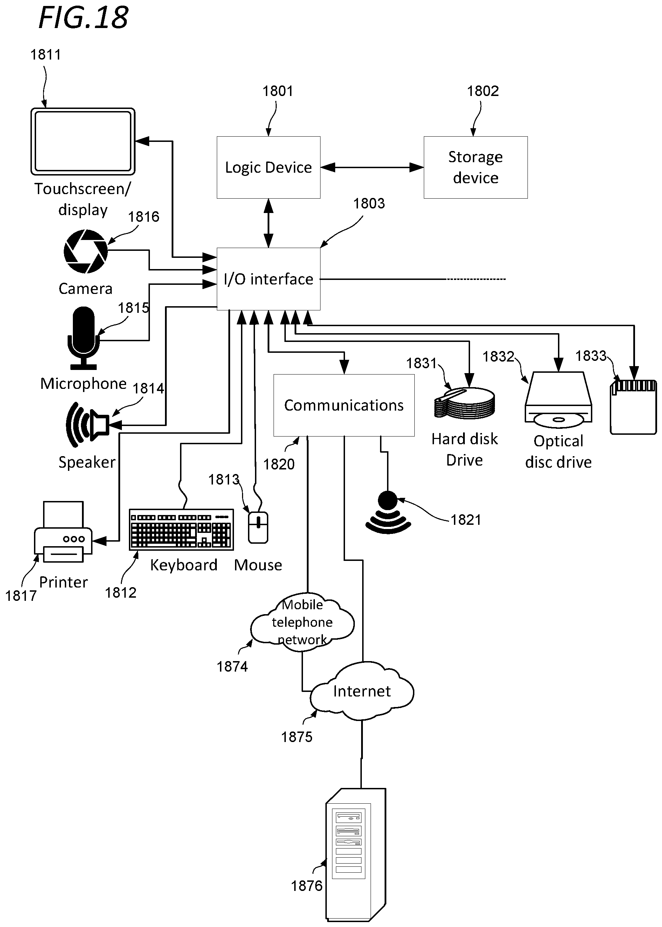

Figure 18 presents a computer suitable for carrying out a method according to an embodiment.

More particularly, figure 18 presents a computer suitable for carrying out a method or receiving and/or transmitting according to any of the mechanisms described above.

In figure 18, the computer includes a Central Processing Unit (CPU) 1801 which may perform the method steps described above while running an executable program, i.e. a set of computer-readable instructions, stored in a memory device such as RAM 1802a or ROM 1802b or hard disk drive 1831, DVD/CD drive 1832, or stored remotely. Moreover, one or more computer files defining the spatial relations graphs, and computer files comprising the virtual space and objects defined therein, may also be stored on one or more of memory devices 1802a, 1802b, 1831, 1832, or remotely.

The claimed invention is not limited by the form of the computer-readable media on which the computer-readable instructions of the inventive process are stored. For example, the instructions and files can be stored on CDs, DVDs, in FLASH memory, RAM, ROM, PROM, EPROM, EEPROM, hard disk or any other information processing device with which the computer communicates, such as a server or computer. The program can be stored on a same memory device or on different memory devices.

Further, a computer program suitable for carrying out the inventive method can be provided as a utility application, background daemon, or component of an operating system, or combination thereof, executing in conjunction with CPU 1801 and an operating system such as Microsoft XP, Microsoft Windows 10, UNIX, Solaris, LINUX, Apple MAC-OS and other systems known to those skilled in the art.

CPU 1801 can be a Xenon processor from Intel of America or a Ryzen processor from AMD of America, or can be other processor types, such as a Freescale ColdFire, IMX, or ARM processor from NXP Semiconductors. Alternatively, the CPU can be a processor such as a Core from Intel Corporation of America, or can be implemented on an FPGA, ASIC, PLD or using discrete logic circuits, as one of ordinary skill in the art would recognize. Further, the CPU can be implemented as multiple processors cooperatively working to perform the computer-readable instructions of the inventive processes described above.

The computer may include a network interface 1820, such as an Intel Ethernet PRO network interface card from Intel Corporation of America, for interfacing with a network, such as a local area network (LAN) 1874, wide area network (WAN), the Internet 1875 and the like. The method may be implemented remotely, by means of a web application, e.g. operating on remote server 1876.

The computer may further include a display controller 1810, such as a NVIDIA GeForce RTX graphics adaptor from NVIDIA Corporation of America for interfacing with display 1811. A general purpose I/O interface 1803 interfaces with a keyboard 1812 and pointing device 1813, such as a roller ball, mouse, touchpad and the like. The display, the keyboard, the sensitive surface for the touch mode and the pointing device, together with the display controller and the I/O interfaces, form a graphical user interface, used by the user to provide input commands. Commands may additionally be issued via a network connection as described below.

Disk controller 1830 connects HDD 1831 and DVD/CD 1832 with communication bus 1820, which can be an ISA, EISA, VESA, PCI, or similar, for interconnecting all of the components of the computer.

A description of the general features and functionality of the display, keyboard, pointing device, as well as the display controller, disk controller, network interface and I/O interface is omitted herein for brevity as these features are known.

The system of figure 18 may implement the operations ascribed to the base station, or any user device. As such, multiple such systems may be provided operating in coordination to execute respective parts of the methods and operations described.

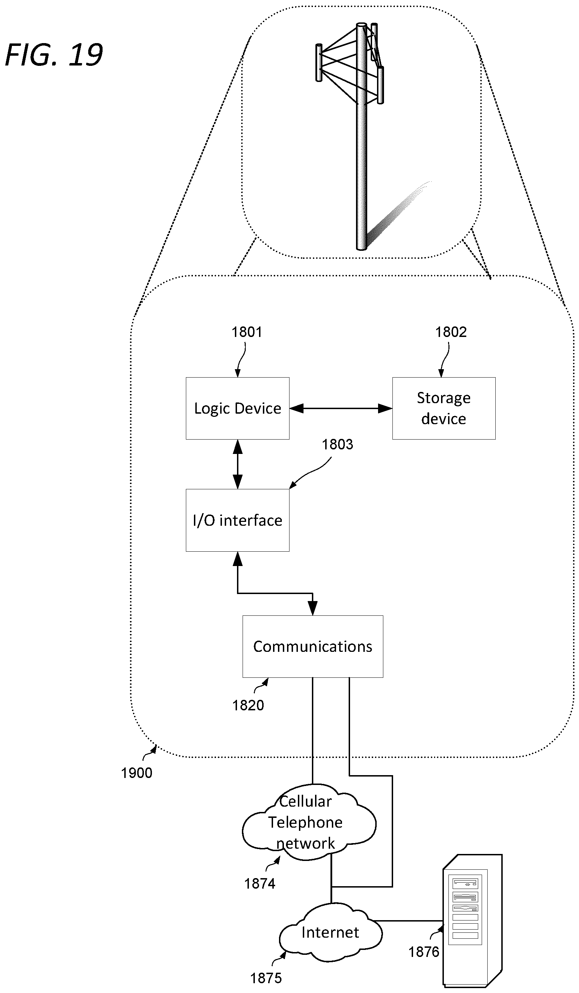

By way of example, Figure 19 presents a base station 1910 incorporating computer suitable for carrying out a method according to an embodiment.

As shown in figure 19, a computer 1900 comprises a subset of the components described with respect to figure 18 as appropriate to such an implementation context. Specifically, the computer includes a Central Processing Unit (CPU) 1801 which may perform the method steps described above while running an executable program, i.e. a set of computer-readable instructions, stored in a memory device 1802, in communication with I/O interface 1803.

The computer may include a network interface 1820, for interfacing with a network, such as a local area network (LAN) 1874, wide area network (WAN), the Internet 1875 and the like. Operations of the method may be implemented remotely, by means of a web application, e.g. operating on remote server 1876.

It will be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed.

The examples described above are given as non-limitative illustrations of embodiments of the invention. They do not in any way limit the scope of the invention which is defined by the following claims.

**Claims**

1. A method of encoding a binary data stream for wireless transmission, said method comprising the steps of:

dividing a complex symbol data stream into two parallel complex symbol substreams,
introducing a delay equal to half the duration of a symbol of said complex symbol data stream to one said complex symbol substream,
performing precoding on each complex symbol substream
performing a delay-Doppler modulated binary data stream encoding of each said complex symbol substream
said operation of performing a delay-Doppler modulated binary data stream encoding comprising the steps of

performing a 2D linear transform to transform the input samples represented in Time-Frequency domain to output samples represented in Delay-Doppler,
performing a 2D linear phase rotation, and
performing a filter bank encoding,

wherein said precoding and said 2D linear phase rotation are defined such that the input to said filter bank consists of real-valued symbols, and
combining said two parallel complex substreams to obtain a data stream for transmission.

2. The method of claim 1 wherein said step of precoding comprises

for each said complex symbol substream, splitting said substream into a plurality of successive batches, each said batch defining an input matrix X of size N x M, and
interleaving said input matrix to obtain an interleaved matrix defined as $X_p[n, m] = X[N - n\text{-}1, M - m - 1]$, where $0 \leq m \leq M - 1$, $0 \leq n \leq N - 1$, $N$ and $M$ represent the number of rows and columns, respectively, of the input matrix X
performing a conjugate operation on said interleaved matrix to obtain a conjugate interleaved matrix and,
concatenating said input matrix with said conjugate interleaved matrix to obtain a precoded matrix of size $2N \times M$.

3. the method of claim 2 wherein said step of performing delay-Doppler modulated binary data stream encoding comprises performing a two-dimensional windowing that includes a two-dimensional linear phase wherein said two-dimensional linear phase rotation comprises

$$W_N^\alpha \, W_M^\beta = \left[ exp\left(\frac{2i\pi\alpha n}{N}\right) exp\left(\frac{2i\pi\beta m}{M}\right) \right]_{n\in[0,2N-1], m\in[0,M-1]}$$

Wherein

$$\alpha = \frac{N+1}{4}; \; \beta = \frac{M-1}{2}$$

for the said complex symbol substream incorporating no delay, and $iW_N^\alpha \, W_M^\beta$ for the said complex symbol substream incorporating said delay.

4. A computer program comprising instructions which, when the program is executed by a computer, cause the computer to carry out the method of any of claims 1 to 3.

5. A computer-readable medium comprising instructions which, when executed by a computer, cause the computer to carry out the method of any of claims 1 to 3.

6. A data encoder for the preparation of a binary data stream for wireless transmission, said encoder comprising:

a splitter configured to dividing a complex symbol data stream into two parallel complex symbol substreams,
a delay block configured to introduce a delay equal to half the duration of a symbol of said complex symbol data stream to one said complex symbol substream,
a precoder for each complex symbol substream configured to perform a precoding operation,

an OTFS encoder configured to perform an OTFS encoding of each said complex symbol substream, wherein said operation of performing an OTFS encoding comprises

performing a 2D linear transform,
performing a 2D linear phase rotation, and
performing a filter bank encoding,

wherein said precoding and said 2D linear phase rotation are defined such that the input to said filter bank consists of real-valued symbols,
and further comprising a concatenator configured to combine said two parallel complex substreams to obtain a data stream for transmission.

7. A method of processing delay-Doppler modulated binary data stream for decoding, said binary data stream modulated with a defined Prototype Filter and comprising blocks of $L$ subchannels, $M$ Doppler/time bins and $N$ Delay/frequency Bins said method comprising the steps of:

extracting a predetermined number $M$ of successive upsampled blocks of size $LN_{UF}$ where $N_{UF}$ is the upsampling factor from said data stream,
performing a Fast Fourier Transform of size $LN_{UF}$ on the extracted block,
extracting the upsampled active carriers from the output of said upsampled fast Fourier transform,
performing a circular convolution on each extracted upsampled active carrier, such that $N_{UF}$ stages of circular convolution are performed by the frequency shifted responses of the prototype filter on each respective extracted upsampled active carrier value to obtain respective vector outputs $Y_m(n, \ell)$ defined as:

$$Y_m(n, \ell) = \sum_{p=-\Delta}^{\Delta} G_\ell(p) X_m(\ell + (n-p)N_{UF})$$

where $\Delta$ denotes the number of non-truncated filter coefficients, and $G$ is the frequency shifted response of the Prototype Filter PF deduced from its impulse response $g$ as

$$G_\ell(p) = e^{i\frac{\pi\ell}{N_{UF}}} \sum_{k=0}^{M-1} g(k)\, e^{i\frac{2\pi\ell(k-\frac{M}{2})}{N}} e^{-i\frac{2\pi pk}{M}}$$

summing the vector outputs $Y_m(n, \ell)$ to obtain a 2N Filter bank outputs $Y_m(n)$ by

$$Y_m(n) = \sum_{\ell=0}^{N_{UF}-1} Y_m(n, \ell)$$

performing a 2D linear phase rotation,
performing a 2D linear transform to transform the input samples represented in Time-Frequency domain to output samples represented in Delay-Doppler domain, and
performing a postprocessing operation, wherein said postprocessing operation comprises a corresponding decoding operation for said delay-Doppler modulation on said $2N \times M$ matrix of Filter bank outputs to obtain an $N \times M$ output data matrix and where said postprocessing operation and said 2D linear phase rotation are defined such that the output to said postprocessing operation, consists of orthogonal complex-valued symbols.

8. The method of claim 7 wherein said 2D linear transform comprises a row-wise IFFT of size $M$, followed by a column-wise FFT of size $2N$, or a column-wise FFT of size $2N$ followed by a row-wise IFFT of size $M$, on said $2N \times M$ matrix.

9. The method of claim 7 or 8 wherein said 2D linear phase rotation comprises

$$W_N^\alpha \, W_M^\beta = \left[ exp\left(\frac{2i\pi\alpha k}{N}\right) exp\left(\frac{2i\pi\beta k'}{M}\right) \right]_{k\in[0,2N-1],k'\in[0,M-1]}$$

Where $\alpha$ and $\beta$ must be chosen to have orthogonal complex-valued symbols at the output of the decoder, and where the sign of the $(\alpha, \beta)$ coefficients must be the opposite of the ones used in the 2D windowing step performed for transmitting data.

**10.** The method of any of claims 7 to 9 wherein said step of postprocessing comprises

partitioning an intermediate $2N \times M$ matrix output by said filter bank decoding operation, into a first submatrix comprising elements the last $N$ rows of said intermediate $2N \times M$ matrix and a second submatrix comprising the remaining first $N$ rows of said intermediate $2N \times M$ matrix,
performing a de-interleaving operation on said first submatrix to obtain a de-interleaved matrix defined as $X_p[n, m]$ = $X[N - n - 1, M - m - 1]$, where $0 \le m \le M - 1$, $0 \le n \le N - 1$, $N$ and $M$ represent the number of rows and columns, respectively, of the first submatrix,
performing a conjugate operation on said de-interleaved first sub-matrix to obtain a conjugate de-interleaved first sub-matrix and,
adding said conjugate de-interleaved first sub-matrix to said second subject.

**11.** The method of claim 10 wherein said 2D linear phase rotation comprises

$$W_N^\alpha \, W_M^\beta = \left[ exp\left(\frac{2i\pi\alpha k}{N}\right) exp\left(\frac{2i\pi\beta k'}{M}\right) \right]_{k\in[0,2N-1],k'\in[0,M-1]}$$

wherein

$$\alpha = \pm\frac{N+1}{4}; \ \beta = \pm\frac{M-1}{2}$$

**12.** A computer program comprising instructions which, when the program is executed by a computer, cause the computer to carry out the method of any of claims 1 to 10.

**13.** A computer-readable medium comprising instructions which, when executed by a computer, cause the computer to carry out the method of any of claims 1 to 10.

**14.** A receiver for decoding a delay-Doppler modulated binary data stream, said binary data stream modulated with a defined Prototype Filter and comprising blocks of $L$ subchannels, $M$ Doppler bins and $N$ Delay Bins said receiver comprising:

a symbol extractor configured to extract a predetermined number $M$ of successive upsampled blocks of size $LN_{UF}$ where $N_{UF}$ is the upsampling factor from said data stream,
a fast Fourier transform module configured to perform a fast Fourier transform of size $LN_{UF}$ on the extracted block,
a subcarrier extractor configured to extract the upsampled active carriers from the output of said upsampled fast Fourier transform,
a processing module configured to perform a circular convolution on each extracted upsampled active carrier, such that $N_{UF}$ stages of circular convolution are performed by the frequency shifted responses of the prototype filter on each respective extracted upsampled active carrier value to obtain respective vector outputs $Y_m(n, \ell)$ defined as:

$$Y_m(n, \ell) = \sum_{p=-\Delta}^{\Delta} G_\ell(p) X_m(\ell + (n - p)N_{UF})$$

where $\Delta$ denotes the number of non-truncated filter coefficients, and G is the frequency shifted response of the Prototype Filter PF deduced from its impulse response g as

$$G_\ell(p) = e^{i\frac{\pi\ell}{N_{UF}}} \sum_{k=0}^{M-1} g(k)\, e^{i\frac{2\pi\ell(k-\frac{M}{2})}{N}} e^{-i\frac{2\pi pk}{M}}$$

a summer configured to sum the vector outputs $Y_m(n, \ell)$ to obtain a 2$N$ Filter bank outputs $Y_m(n)$ by

$$Y_m(n) = \sum_{\ell=0}^{N_{UF}-1} Y_m(n, \ell)$$

a phase rotation module configured to perform a 2D linear phase rotation on the output of said summer,
a linear transform, module configured to perform a 2D linear transform on the output of said phase rotation module, and
A postprocessing module, configured to perform a corresponding decoding operation for said delay-Doppler modulation on said *2N × M* matrix of Filter bank outputs to obtain an *N × M* output data matrix and where said postprocessing operation and said 2D linear phase rotation are defined such that the output to said postprocessing operation, consists of orthogonal complex-valued symbols.

## FIG. 1

## FIG. 2

## FIG. 3

*FIG. 4*

*FIG. 5*

## FIG. 6

| ① | 2 | 3 | 4 | ⑤ | 6 | 7 | 8 |
|---|---|---|---|---|---|---|---|
| 9 | 10 | 11 | 12 | 13 | 14 | 15 | 16 |
| 17 | 18 | 19 | 20 | 21 | 22 | 23 | 24 |
| 25 | 26 | 27 | 28 | 29 | 30 | 31 | 32 |
| 33 | 34 | 35 | 36 | 37 | 38 | 39 | 40 |
| 41 | 42 | 43 | 44 | 45 | 46 | 47 | 48 |
| 49 | 50 | 51 | 52 | 53 | 54 | 55 | 56 |
| 57 | 58 | 59 | 60 | 61 | 62 | 63 | 64 |
| 65 | 66 | 67 | 68 | 69 | 70 | 71 | 72 |

$$X_1 = [2\ 3\ 4],\ X_5 = [1]$$

$$X_2 = [6\ 7\ 8],\ X_6 = [5]$$

$$X_3 = [9\ 17\ 25\ 33\ 41\ 49\ 57\ 65]^T$$

$$X_4 = \begin{bmatrix} 10 & 11 & 12 & 13 & 14 & 15 & 16 \\ 18 & 19 & 20 & 21 & 22 & 23 & 24 \\ 26 & 27 & 28 & 29 & 30 & 31 & 32 \\ 34 & 35 & 36 & 37 & 38 & 39 & 40 \\ 42 & 43 & 44 & 45 & 46 & 47 & 48 \\ 50 & 51 & 52 & 53 & 54 & 55 & 56 \\ 58 & 59 & 60 & 61 & 62 & 63 & 64 \\ 66 & 67 & 68 & 69 & 70 & 71 & 72 \end{bmatrix}$$

## FIG. 7

$X_1'$

| ℝ[1] | 2 | 3 | 4 | I[1] | 4* | 3* | 2* |
|---|---|---|---|---|---|---|---|
| 9 | 10 | 11 | 12 | 13 | 14 | 15 | 16 |
| 17 | 18 | 19 | 20 | 21 | 22 | 23 | 24 |
| 25 | 26 | 27 | 28 | 29 | 30 | 31 | 32 |
| 33 | 34 | 35 | 36 | 37 | 38 | 39 | 40 |
| 41 | 42 | 43 | 44 | 45 | 46 | 47 | 48 |
| 49 | 50 | 51 | 52 | 53 | 54 | 55 | 56 |
| 57 | 58 | 59 | 60 | 61 | 62 | 63 | 64 |
| 65 | 66 | 67 | 68 | 69 | 70 | 71 | 72 |

$X_5'$ $X_2'$

| ℝ[5] | 6 | 7 | 8 | I[5] | 8* | 7* | 6* |
|---|---|---|---|---|---|---|---|
| 65* | 72* | 71* | 70* | 69* | 68* | 67* | 66* |
| 57* | 64* | 63* | 62* | 61* | 60* | 59* | 58* |
| 49* | 56* | 55* | 54* | 53* | 52* | 51* | 50* |
| 41* | 48* | 47* | 46* | 45* | 44* | 43* | 42* |
| 33* | 40* | 39* | 38* | 37* | 36* | 35* | 34* |
| 25* | 32* | 31* | 30* | 29* | 28* | 27* | 26* |
| 17* | 24* | 23* | 22* | 21* | 20* | 19* | 18* |
| 9* | 16* | 15* | 14* | 13* | 12* | 11* | 10* |

$X_4'$  $X_6'$  $X_3'$

FIG. 8

## FIG. 9a

$M$

$$2N \begin{bmatrix} 1 & 2 & 3 & 4 & 5 & 6 & 7 & 8 \\ 9 & 10 & 11 & 12 & 13 & 14 & 15 & 16 \\ 17 & 18 & 19 & 20 & 21 & 22 & 23 & 24 \\ 25 & 26 & 27 & 28 & 29 & 30 & 31 & 32 \\ 33 & 34 & 35 & 36 & 37 & 38 & 39 & 40 \\ 41 & 42 & 43 & 44 & 45 & 46 & 47 & 48 \\ 49 & 50 & 51 & 52 & 53 & 54 & 55 & 56 \\ 57 & 58 & 59 & 60 & 61 & 62 & 63 & 64 \\ 65 & 66 & 67 & 68 & 69 & 70 & 71 & 72 \end{bmatrix}$$

Non-active carriers

Active carriers

Non-active carriers

$M$

$$L \begin{bmatrix} 0 & 0 & 0 & 0 & 0 & 0 & 0 & 0 \\ 0 & 0 & 0 & 0 & 0 & 0 & 0 & 0 \\ 0 & 0 & 0 & 0 & 0 & 0 & 0 & 0 \\ 1 & 2 & 3 & 4 & 5 & 6 & 7 & 8 \\ 9 & 10 & 11 & 12 & 13 & 14 & 15 & 16 \\ 17 & 18 & 19 & 20 & 21 & 22 & 23 & 24 \\ 25 & 26 & 27 & 28 & 29 & 30 & 31 & 32 \\ 33 & 34 & 35 & 36 & 37 & 38 & 39 & 40 \\ 41 & 42 & 43 & 44 & 45 & 46 & 47 & 48 \\ 49 & 50 & 51 & 52 & 53 & 54 & 55 & 56 \\ 57 & 58 & 59 & 60 & 61 & 62 & 63 & 64 \\ 65 & 66 & 67 & 68 & 69 & 70 & 71 & 72 \\ 0 & 0 & 0 & 0 & 0 & 0 & 0 & 0 \\ 0 & 0 & 0 & 0 & 0 & 0 & 0 & 0 \\ 0 & 0 & 0 & 0 & 0 & 0 & 0 & 0 \\ 0 & 0 & 0 & 0 & 0 & 0 & 0 & 0 \end{bmatrix}$$

## FIG. 9b

$M$

$$2N \begin{bmatrix} 1 & 2 & 3 & 4 & 5 & 6 & 7 & 8 \\ 9 & 10 & 11 & 12 & 13 & 14 & 15 & 16 \\ 17 & 18 & 19 & 20 & 21 & 22 & 23 & 24 \\ 25 & 26 & 27 & 28 & 29 & 30 & 31 & 32 \\ 33 & 34 & 35 & 36 & 37 & 38 & 39 & 40 \\ 41 & 42 & 43 & 44 & 45 & 46 & 47 & 48 \\ 49 & 50 & 51 & 52 & 53 & 54 & 55 & 56 \\ 57 & 58 & 59 & 60 & 61 & 62 & 63 & 64 \\ 65 & 66 & 67 & 68 & 69 & 70 & 71 & 72 \end{bmatrix}$$

$$L \begin{bmatrix} 1 & 2 & 3 & 4 & 5 & 6 & 7 & 8 \\ 9 & 10 & 11 & 12 & 13 & 14 & 15 & 16 \\ 17 & 18 & 19 & 20 & 21 & 22 & 23 & 24 \\ 25 & 26 & 27 & 28 & 29 & 30 & 31 & 32 \\ 33 & 34 & 35 & 36 & 37 & 38 & 39 & 40 \\ 41 & 42 & 43 & 44 & 45 & 46 & 47 & 48 \\ 49 & 50 & 51 & 52 & 53 & 54 & 55 & 56 \\ 57 & 58 & 59 & 60 & 61 & 62 & 63 & 64 \\ 65 & 66 & 67 & 68 & 69 & 70 & 71 & 72 \\ 0 & 0 & 0 & 0 & 0 & 0 & 0 & 0 \\ 0 & 0 & 0 & 0 & 0 & 0 & 0 & 0 \\ 0 & 0 & 0 & 0 & 0 & 0 & 0 & 0 \\ 0 & 0 & 0 & 0 & 0 & 0 & 0 & 0 \\ 0 & 0 & 0 & 0 & 0 & 0 & 0 & 0 \end{bmatrix}$$

Circular shift (c) (Row wise) → $L \times M$

## FIG. 9c

$M$

$$2N \begin{bmatrix} 1 & 2 & 3 & 4 & 5 & 6 & 7 & 8 \\ 9 & 10 & 11 & 12 & 13 & 14 & 15 & 16 \\ 17 & 18 & 19 & 20 & 21 & 22 & 23 & 24 \\ 25 & 26 & 27 & 28 & 29 & 30 & 31 & 32 \\ 33 & 34 & 35 & 36 & 37 & 38 & 39 & 40 \\ 41 & 42 & 43 & 44 & 45 & 46 & 47 & 48 \\ 49 & 50 & 51 & 52 & 53 & 54 & 55 & 56 \\ 57 & 58 & 59 & 60 & 61 & 62 & 63 & 64 \\ 65 & 66 & 67 & 68 & 69 & 70 & 71 & 72 \end{bmatrix}$$

$$L \begin{bmatrix} 1 & 2 & 3 & 4 & 5 & 6 & 7 & 8 \\ 9 & 10 & 11 & 12 & 13 & 14 & 15 & 16 \\ 17 & 18 & 19 & 20 & 21 & 22 & 23 & 24 \\ 25 & 26 & 27 & 28 & 29 & 30 & 31 & 32 \\ 33 & 34 & 35 & 36 & 37 & 38 & 39 & 40 \\ 41 & 42 & 43 & 44 & 45 & 46 & 47 & 48 \\ 49 & 50 & 51 & 52 & 53 & 54 & 55 & 56 \\ 57 & 58 & 59 & 60 & 61 & 62 & 63 & 64 \\ 65 & 66 & 67 & 68 & 69 & 70 & 71 & 72 \\ 0 & 0 & 0 & 0 & 0 & 0 & 0 & 0 \\ 0 & 0 & 0 & 0 & 0 & 0 & 0 & 0 \\ 0 & 0 & 0 & 0 & 0 & 0 & 0 & 0 \\ 0 & 0 & 0 & 0 & 0 & 0 & 0 & 0 \\ 0 & 0 & 0 & 0 & 0 & 0 & 0 & 0 \end{bmatrix}$$

IFFT (size L) → $\times$ → $L \times M$

$e^{j\frac{2\pi kc}{\ell}}$

## FIG. 10

```
                              Start                    ──1000

                                │
                                ▼
                   Divide complex symbol datastream into    ──1010
                           two substreams

                                │
                                ▼
                   Delay one substream by a half symbol     ──1020

                                │
                                ▼
                       precode each substream               ──1030

                                │
          ┌ ─ ─ ─ ─ ─ ─ ─│─ ─ ─ ─ ─ ─ ┐        ──1040
          │                 ▼            │
          │      Perform 2D linear Transform    │           ──1041
          │                 │            │
          │                 ▼            │
          │   Perform 2D linear Phase rotation  │           ──1042
          │                 │            │
          │                 ▼            │
          │     Perform Filter bank encoding    │           ──1043
          └ ─ ─ ─ ─ ─ ─ ─│─ ─ ─ ─ ─ ─ ┘
                                │
                                ▼
                        Combine substreams                  ──1050

                                │
                                ▼
                              End                     ──1060
```

## FIG. 11

## FIG. 12a

## FIG. 12b

1201b

$M$

$LN_{UF}$

$$\begin{bmatrix} 0 & 0 & 0 & 0 \\ 0 & 0 & 0 & 0 \\ 1 & 2 & 3 & 4 \\ 5 & 6 & 7 & 8 \\ 9 & 10 & 11 & 12 \\ 13 & 14 & 15 & 16 \\ 17 & 18 & 19 & 20 \\ 21 & 22 & 23 & 24 \\ 25 & 26 & 27 & 28 \\ 29 & 30 & 31 & 32 \\ 0 & 0 & 0 & 0 \\ 0 & 0 & 0 & 0 \\ 0 & 0 & 0 & 0 \end{bmatrix}$$

1202b

$M$

$$\begin{bmatrix} 1 & 2 & 3 & 4 \\ 5 & 6 & 7 & 8 \\ 9 & 10 & 11 & 12 \\ 13 & 14 & 15 & 16 \\ 17 & 18 & 19 & 20 \\ 21 & 22 & 23 & 24 \\ 25 & 26 & 27 & 28 \\ 29 & 30 & 31 & 32 \\ 0 & 0 & 0 & 0 \\ 0 & 0 & 0 & 0 \\ 0 & 0 & 0 & 0 \\ 0 & 0 & 0 & 0 \\ 0 & 0 & 0 & 0 \end{bmatrix}$$

→ 1

Active carriers

→ $N_{UF}(2N + 2\Delta)$

## FIG. 12c

1201c

$M$

$LN_{UF}$

$$\begin{bmatrix} 0 & 0 & 0 & 0 \\ 0 & 0 & 0 & 0 \\ 1 & 2 & 3 & 4 \\ 5 & 6 & 7 & 8 \\ 9 & 10 & 11 & 12 \\ 13 & 14 & 15 & 16 \\ 17 & 18 & 19 & 20 \\ 21 & 22 & 23 & 24 \\ 25 & 26 & 27 & 28 \\ 29 & 30 & 31 & 32 \\ 0 & 0 & 0 & 0 \\ 0 & 0 & 0 & 0 \\ 0 & 0 & 0 & 0 \end{bmatrix}$$

→ $x$

Active carriers

→ $x + N_{UF}(2N + 2\Delta) - 1$

1202c

$$\begin{bmatrix} 1 & 2 & 3 & 4 \\ 5 & 6 & 7 & 8 \\ 9 & 10 & 11 & 12 \\ 13 & 14 & 15 & 16 \\ 17 & 18 & 19 & 20 \\ 21 & 22 & 23 & 24 \\ 25 & 26 & 27 & 28 \\ 29 & 30 & 31 & 32 \end{bmatrix}$$

## FIG. 13

## FIG. 14

# FIG. 15

## FIG. 16

$Y_1$ ←   $Y_2$ ←

$X_5'$ ←

$X_6'$ ←

| 1 | 2 | 3 | 4 | 5 | 6 | 7 | 8 |
|---|---|---|---|---|---|---|---|
| 9 | 10 | 11 | 12 | 13 | 14 | 15 | 16 |
| 17 | 18 | 19 | 20 | 21 | 22 | 23 | 24 |
| 25 | 26 | 27 | 28 | 29 | 30 | 31 | 32 |
| 33 | 34 | 35 | 36 | 37 | 38 | 39 | 40 |
| 41 | 42 | 43 | 44 | 45 | 46 | 47 | 48 |
| 49 | 50 | 51 | 52 | 53 | 54 | 55 | 56 |
| 57 | 58 | 59 | 60 | 61 | 62 | 63 | 64 |
| 65 | 66 | 67 | 68 | 69 | 70 | 71 | 72 |

$Y_3$

**Decoded data**

$Y_4$

## FIG. 17

Start — 1700

↓

Extract upsampled blocks — 1710

↓

Perform FFT — 1720

↓

Extract active carriers — 1730

↓

Perform Circular Convolution — 1740

↓

Sum vector ourputs — 1750

↓

Perform 2D linear phase rotation — 1760

↓

Perform 2 D linear Transform — 1770

↓

Decoding — 1780

↓

End — 1790

# FIG.18

FIG. 19

1801

Logic Device

1802

Storage
device

1803

I/O interface

Communications

1820

1900

Cellular
Telephone
network

1874

Internet

1875

1876

# EUROPEAN SEARCH REPORT

**Application Number**

EP 25 30 5050

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KHUC BANG ET AL: "FBMC/OQAM with OTFS Pre-Processing for High-Mobility Channels", 2024 INTERNATIONAL CONFERENCE ON ELECTRICAL ENGINEERING AND PHOTONICS (EEXPOLYTECH), IEEE, 17 October 2024 (2024-10-17), pages 186-189, XP034755136, DOI: 10.1109/EEXPOLYTECH62224.2024.10755876 [retrieved on 2024-11-20] * Section II.; figure 1 * | 1-14 | INV. H04L27/26 |
| A | PEREIRA JUNIOR R ET AL: "A Two-Dimensional FFT Precoded Filter Bank Scheme", ARXIV.ORG, CORNELL UNIVERSITY LIBRARY, 201 OLIN LIBRARY CORNELL UNIVERSITY ITHACA, NY 14853, 11 June 2022 (2022-06-11), XP091245771, * Section III.; figure 3 * | 1-14 | |
| | | | **TECHNICAL FIELDS SEARCHED (IPC)** |
| | | | H04L |

The present search report has been drawn up for all claims

| Place of search | Date of completion of the search | Examiner |
|---|---|---|
| Berlin | 13 June 2025 | Chave, Julien |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

**Non-patent literature cited in the description**

- **NADAL, J.** ; **ABDEL NOUR, C.** ; **BAGHDADI, A.** Design and Evaluation of a Novel Short Prototype Filter for FBMC/OQAM Modulation. *IEEE Access*, 2018, vol. 6, 19 610-19 625
- **LI, M.** ; **LIU, W.** ; **LEI, J.** A review on orthogonal time-frequency space modulation: State-of-art, hotspots and challenges. *Computer Networks*, 2023, vol. 224, 109597, https://www.sciencedirect.com/science/article/pii/S1389128623000427
- **ZAKARIA, R.** ; **LE RUYET, D**. A novel filter-bank multicarrier scheme to mitigate the intrinsic interference: Application to MIMO systems. *IEEE Transactions on Wireless Communications*, 2012, vol. 11 (3), 1112-1123

- **DEMMER, D** ; **GERZAGUET, R.** ; **DORÉ, J.-B.** ; **LE RUYET, D.** ; **KTÉNAS, D.** Block-filtered ofdm: A novel waveform for future wireless technologies. *IEEE International Conference on Communications (ICC)*, 2017, 1-6
- **PEREIRA, R.** ; **DA ROCHA, C. A. F.** ; **CHANG, B. S** ; **LE RUYET, D**. A two-dimensional FFT precoded filter bank scheme. *IEEE Transactions on Wireless Communications*, September 2023, 1-1